# EUROPEAN PATENT APPLICATION

(11) **EP 2 336 764 A1**
(43) Date of publication of application: **22.06.2011**
(21) Application number: 09811272.5
(22) Date of filing: 01.09.2009
(51) Int. Cl.: G01N 30/02, G01N 30/20, G01N 30/24, G01N 30/54, G01N 30/60

(54) **LIQUID CHROMATOGRAPH**

(30) Priority: 02.09.2008 JP 2008225335
(71) Applicant: GL Sciences Incorporated, Tokyo 163-1130 (JP)
(72) Inventor: ZHOU, Xiaojing, Iruma-shi Saitama 358-0032 (JP); UZU, Hideyuki, Iruma-shi Saitama 358-0032 (JP)
(74) Representative: Schmid, Wolfgang
(86) International application number: PCT/JP2009/004307
(87) International publication number: WO 2010/026742

(57) **Abstract**

A liquid chromatograph provided here is adapted to enable the lengths of tubings for connecting the respective constituent elements thereof to be minimized by making the positions of the respective constituent elements including a detector and a column movable and adjustable in order to reduce the dead volume in a liquid chromatograph system in plumbing and increase the analytical precision through prevention of diffusion of samples and rapid sending of a mixed liquid solvent. Furthermore, in order to prevent cross-contamination due to residues of samples and cleaning liquid in a flow channel of the liquid chromatograph system, an injection port in which a needle can be inserted is so provided as to communicate directly with a flow channel of an injection valve.

## Description

### Technical Field:

The present invention relates to liquid chromatograph (hereinafter referred to as LC system) and related systems. In the system, each component is rationally arranged and connected in the shortest distance to reduce system dead volume including tubing, and prevent diffusion of the sample. While rapid mixed solvent delivery results in the improvement of analytical accuracy, each components which is sensitive to change in ambient temperature can be installed in a suitable environment where the effect of change in environmental conditions on analytical results is reduced and controlled to achieve high reproducibility and reliability. The attachment and maintenance of each components can be easily performed, and only detection unit of the detectors built in an oven to keep its stability and avoid large size of the oven and the LC system. The lines of the sample and the flushing solvent can be rationally arranged, and completely flushed with suitable solvents to prevent carry-over and cross contamination.

### Background Art:

A typical prior art related LC system comprise pump for liquid-delivery, mixer for mixing of several elutes, injector for introducing sample into mobile phase, column in which the injected sample is separated when it passes through together mobile phase, and detector for detecting the separated sample and its concentration. Generally, the components (units) are independently piled up and, therefore, their connection is irrational and leads to increase in tubing length and dead volume and decrease in separation performance of the column.

In the LC systems of this kind, since the constituent elements have generally been prioritized in their respective functions and disposed independently of one another, tubes for connecting the elements have lacked in rationality, the tubes for the respective elements have become long to increase the dead volume, the separation performance of the column has not been fulfilled, the enhancement of the analytical performance has not been attained and, moreover, it has been irrational that the countermeasures against analytical environment including temperature management for the respective elements have had to be individually taken. In addition, when it has been required to select and alter the detector in accordance with conditions of analysis of the sample, such problems as necessitating addition and exchange of a single item of device have been entailed. In this case, it has been required to take time in the exchange and secure the installation site of the device.

In order to solve the above mentioned problems, the autosampler equipped with injection valve was placed over a column oven and both the column and the injection valve was built in the oven. The column and injection valve are connected with a tubing, the head of the injection valve is allowed to be built in the oven and disposed immediately above the upper end of the column to thereby shorten the tubing length, reduce the dead volume of that portion, suppress diffusion of the sample when moving on that portion, minimize the difference in temperature before and after the injection of a sample and enhance the analytical precision (refer, for example, to Patent Document 1).

However, the above device has restrictions on the position of the valve head in the oven, and hence had a limitation in shortening the tubing length for connecting the column and injection valve, and there have been limitations to reduction of the dead volume in that portion. In addition, since the detector is disposed outside the oven, this fact has entailed problems of elongating the tubing length and increasing the dead volume in that portion. Furthermore, since the gradient mixer built in the oven and the injection valve or column are disposed apart from each other, this leads to the possibility of gradient delay and the difference from the gradient program. Moreover, since the injection valve is disposed between the autosampler and the oven, this results in many problems with the disposition and positioning of the autosampler and the oven as well as the maintenance and inspection of the injection valve.

Another liquid chromatography has been proposed to solve the above problems, in which a liquid-delivery unit and an oven unit are accommodated within a housing an injector port is mounted in outside of the housing to eliminate the use of some tubing for the constituent elements unnecessary; the injector is disposed in the vicinity of the rotation axis of a sub-door to minimize the distance between the injector and a column and reduce the dead volume in the connecting tubing (refer, for example, to Patent Document 2).

However, the above device has entailed problems of taking a sufficient length of the tubing for connecting the injector and the column because the injector is moved in association with the opening/closing operation of the sub-door; this increased dead volume of the connection tubing degree of the sample diffusion. In addition, since the housing has accommodated therein the oven unit that is an element required for the analysis, this fact has entailed problems of making the housing large and heavy, carrying and installing the housing with difficulty and inconvenient maintenance of the column or detector within the oven unit.

Furthermore, still another liquid chromatograph has been proposed to solve the above problems, in which an eluting solution supply unit, a liquid-delivery pump, an injection valve, a pre-filter and a column holder are stored in a temperature adjustment box, the temperature of the box is adjusted to a constant value through sending of hot air to the box, and the analyses are performed under the same measurement conditions to enable high-precision (refer, for example, Patent Document 3).

However, the above device has entailed problems of requiring a wide storing space because the plural measurement units are stored in the temperature adjustment box to enlarge the size and weight of the device, increasing the analysis cost because of a large heat load and making the maintenance of the measurement units inconvenient.

In the meantime, there is proposed a liquid chromatograph equipped with a sample-introducing unit (autosampler) which can automatically introduce plural samples into a column. The autosampler is equipped with a needle which can move to a prescribed direction to suck and discharge the samples, a multi-port valve which can switch between a sample-injection line in which the sample loaded in a sample loop is delivered into a column by the flow of mobile phase, and a sample-load line in which a sample is loaded into the sample loop via a needle. After the needle is moved to a sample storage container for sucking sample with a syringe pump, a mobile phase having the sample liquid placed thereon is sent to the column to enable measurement of the sample liquid and, at the same time, the needle excluding a flow channel for the mobile phase and a sample-moving flow channel communicating with the needle are cleaned after the measurement in preparation for subsequent measurement, and cross-contamination resulting from attachment of the sample or due to residues is prevented from occurring, thereby attaining analysis reliability.

A method for cleaning the autosampler comprises the steps of moving the needle completed sample injection therein to and inserting it into a cleaning port, sucking cleaning liquid in the syringe pump, sending the cleaning liquid toward the needle, cleaning part of the sample-moving flow channel and the inside of the needle, thereafter moving the needle and immersing it in second cleaning liquid, and cleaning the second cleaning liquid having adhered to the needle. It further comprises the steps of sucking the second cleaning liquid in the syringe pump, pulling the needle upward from the second cleaning liquid and again moving it into the cleaning port, discharging the intake second cleaning liquid out to the cleaning port, and cleaning with the second cleaning liquid the inside of the needle and the sample-moving flow channel communication with the needle (refer, for example, to Patent Document 4).

In the method for cleaning the inside and outside the needle, however, since the needle completed sample injection therein that has been moved to the cleaning port and moved from the cleaning port into the second cleaning liquid is again moved to the cleaning port, the cleaning process is cumbersome and requires great care, and its operation control becomes complicated. Furthermore, since a cleaning liquid bottle is disposed near a sample bottle, the sample or cleaning liquid having adhered to the needle drops onto the sample bottle or cleaning liquid bottle during movement of the needle to foul the neighborhood of the needle-moving region and, at the same time, incur cross-contamination, thereby lowering the reliability of the analysis. This has been problematic.

In addition, another method for cleaning the autosampler proposed comprises the steps of providing a spray nozzle on the upper portion of a cleaning port, connecting the spray nozzle to a cleaning liquid supply passage, providing a drain outlet on the bottom of the cleaning port, causing the drain outlet to communicate with a liquid-pooling tank, moving a needle completed sample injection therein to the inside of the cleaning port, sending cleaning quid to the needle, cleaning part of the sample-moving flow channel and the inside of the needle in the same manner as described above, thereafter supplying the cleaning liquid to the spray nozzle, cleaning the needle through spraying pump the cleaning liquid onto the outside of the needle and discharging the used cleaning liquid out to the liquid-pooling tank (refer, for example, to Patent Document 5).

However, the method for cleaning the inside and outside the needle has entailed problems of requiring the needle completed sample injection therein to move to the cleaning port, making the cleaning process cumbersome and requiring great care relative to the cleaning process, making its operation control complicated and, at the same time, allowing the sample or cleaning liquid having attached to the needle to drop onto the sample bottle during the movement of the sample because the cleaning port is disposed near the sample bottle, thereby fouling the neighborhood of the needle-moving region and incurring cross-contamination to thereby lowering the reliability of the analysis and also allowing droplets of the cleaning liquid to fly in all directions from the spray nozzle to foul the neighborhood of the cleaning port and deteriorating the analytical environment.

### Prior Art Documents:

### Patent Documents:

Patent Document 1: Japanese Patent No. 3297083
Patent Document 2: Japanese Patent No. 3324299
Patent Document 3: JP-A 2001-74721
Patent Document 4: Japanese Patent No. 3142606
Patent Document 5: JP-A HEI 5-60736

### Disclosure of the Invention:

### Subject of the Invention :

The object of the present invention is to provide liquid chromatograph which is capable of solving the aforementioned problems and suitable for liquid chromatograph system (hereinafter referred to as LC system), and which has its constituent elements installed rationally, enables the lengths of tubing for connecting the respective constituent elements to be minimized, reduces the dead volume in the LC system lines, increases the analytical precision through the prevention of sample diffusion and rapid movement of a mixed solvent and, at the same time, sets analytical environment relative to the respective constituent elements rationally and suppresses influences resulting from fluctuation of the analytical environment to thereby enable the repeatability and reliability of the analytical results and enable the attachment, maintenance and inspection of the respective constituent elements to be performed with ease, while installing the flow cell including detection unit of a detector within a oven of constant temperature, suppressing the oven or LC system being large in size, simultaneously cleaning flow channels with cleaning liquid precisely and rationally, and preventing cross-contamination resulting from residues of the samples and cleaning liquid in the flow channels and, at the same time, isolating the area of movement of a needle during cleaning from a pool area of the samples and obviating contamination resulting from a fall of the samples and cleaning liquid having adhered to a needle, thereby enabling the analytical reliability.

### Means for solving the Problems:

The invention of claim 1 relates to a liquid chromatograph comprising a sample tray for storing thereon multiple sample bottles containing samples; an autosampler equipped with a needle that moves above the sample tray and is capable of sucking therein and discharging therefrom each of the samples; an injection port into which the needle is inserted; an oven having an interior adjustable in temperature to a prescribed temperature; and an injection valve which has a flow channel and into which a sample is loaded via the needle, a mixer capable of mixing plural elution solvents, a column which has an inlet and an outlet and is capable of separating a sample containing plural components and a detector capable of measuring the separated components, which are all disposed in the oven wherein the injection valve is disposed within the oven and above an upper side of the column. The mixer and the inlet of the column are placed closing to the injection valve, and the flow cell including detection unit is placed closing to the exit side of the column. The injection port is disposed on one side of the autosampler and connected with the injection valve to enable the injection port to connect with the flow channel of the injection valve. The injection valve and injection port are allowed to communicate with each other in the smallest length, so that any connection tubing between them can be omitted, and each of connection tubing between the injection valve and the mixer, between the injection valve and the inlet of the column and between the outlet of the column and the flow cell including detection unit of the detector is plumbed in the shortest length to reduce a dead volume in each connection. By suppressing the diffusion of the sample and obtaining the concentration gradient relative to the flow direction of a mobile phase correctly, the analytical precision can be enhanced. The injection valve, mixer, column and flow cell including detection unit are set in the same analytical environment to suppress the influence caused by a change in temperature and obtain analytical reliability. By improvement of the maintenance of the constituent elements and installing the flow cell including detection unit within the oven, it is possible to prevent the size enlargement of the oven and the variation and distribution of temperature, suppress the size enlargement of the LC system and realize safety and reliability of the samples injected by the needle via the injection port.

The invention of claim 2 relates to the liquid chromatograph, wherein the flow cell including detection unit of the detector is installed at a position which is close to the column and which is movable and adjustable so as to be corresponding to a position of the column. As a result, it is possible to compactly and rationally dispose the flow cell including detection unit, realize the shortest line for connection between the column and the flow cell including detection unit and reduce the dead volume in the line. The invention of claim 3 relates to the liquid chromatograph, wherein the column is installed at a position movable and adjustable in a three-dimensional direction relative to the injection valve or switching valve and the flow cell including detection unit. As a result, it is possible to compactly and rationally dispose the column and injection valve or the switching valve and the flow cell including detection unit, realize the shortest line for connection among them and reduce the dead volume in the line.

The invention of claim 4 relates to the liquid chromatograph further comprising at least one switching valve, wherein the injection valve and the switching valve are disposed closely within the oven kept at a constant temperature. As a result, it is possible to realize the line for connection between them, reduce the dead volume in the line, eliminate cumbersome steps of performing the installation required for the external installation of the switching valve and not need an external installation space, and the switching valve is not influenced by ambient temperature and can obtain sharp peaks and high repeatability. By combination of the separation columns different in separation mode to plural switching valves, for example, it is possible to obtain larger peak capacity and achieve complicated separation of the samples. The invention of claim 5 relates to the liquid chromatograph, wherein the needle has a tapered end and linear contact with a lower portion of the injection port. As a result, it is possible to suppress the area of contact between the injection port and the needle and prevent contamination occurred in the contact portion while establishing the injection precision. The invention of claim 6 relates to the liquid chromatograph, wherein the injection port has a lower end portion connected to the injection valve with screws and is provided in an upper peripheral surface with a pair of notched portions with which a tool is able to engage. As a result, it is possible to correctly connect the injection port with the injection valve when engage a wrench with the notched portions to perform firm installation. The invention of claim 7 relates to the liquid chromatograph, further comprising plural liquid-delivery pumps disposed immediately below the mixer so as to enable elution solvents to be delivered via the tubing. As a result, it is possible to connect the tubing in the respective shortest lengths, reduce the dead volume in each of the tubing and enhance the analytical precision.

The invention of claim 8 relates to the liquid chromatograph, further comprising plural separation columns different in separation mode and plural switching valves, which are disposed within the oven kept at constant temperature, and are able to communicate with one another. As a result, the constituent elements and plural switching valves are not affected by ambient temperature and hence sharp peaks and high repeatability can be obtain. The invention of claim 9 relates to the liquid chromatograph, wherein two switching valves are installed in the oven kept at a constant temperature, and one is connected with first-dimensional column and the other is connected with second-dimensional column. As a result, it is possible to obtain larger peak capacity, build up a two-dimensional liquid chromatography enabling the separation for a complicated sample, and fulfill sufficient performance as a main apparatus for the proteomic analysis.

The invention of claim 10 relates to a liquid chromatograph comprising an autosampler equipped with a sample tray for storing thereon multiple sample bottles containing samples, a cleaning port capable of storing cleaning liquid therein and discharging it therefrom and a needle that moves between the sample tray and the cleaning port and is capable of sucking therein and discharging therefrom each of the samples contained in the sample bottles; an injection valve which has a flow channel therein and into which each sample is capable of being injected via the needle; an injection port allowed to communicate with the flow channel of the injection valve and for inserting therein and detaching therefrom the needle; and plural cleaning ports for storing therein different cleaning liquids,
wherein the injection port and cleaning ports are disposed on one side within the autosampler immediately above the injection valve and disposed apart from the sample tray. As a result, it is possible to separate the region of movement of the needle during the cleaning and the plural cleaning ports from the periphery of the sample tray, obviate falling of the sample liquid or cleaning liquid having adhered to the needle into the sample bottles and admixing it with the samples in the sample bottles, prevent occurrence of cross-contamination and safely and exactly clean the injection port and the flow channel in the injection valve using the needle and injection port.

The invention of claim 11 relates to the liquid chromatograph, the needle is airtightly engaged with the injection port allowed to communicate with the flow channel of the injection valve, and the cleaning liquid supplied into the needle is delivered to the injection port and the flow channel of the injection valve, thereby discharging the cleaning liquid outside of the injection valve. As a result, the injection port and the flow channel in the injection valve can be cleaned. The invention of claim 12 relates to the liquid chromatograph, further comprising suction and discharge means coordinating an end of the needle into which the sample liquid has been injected and which has been immersed in the cleaning liquid in the cleaning port to enable the cleaning liquid to be sucked into and discharged from the needle. As a result, the cleaning liquid can make a movement into and out of the needle to enable the movement to precisely clean the inside of the needle.

The invention of claim 13 relates to the liquid chromatograph according to claim 10, wherein the needle into which the sample liquid has been injected is retained above and apart from the injection port, and the cleaning liquid is capable of being supplied into the needle, allowed to drop or flow downward into the injection port and moved in the flow channel in the injection valve and discharged outside the injection valve. As a result, it is possible to avoid contact between the needle having adhered the sample liquid thereto and the injection port to enable the cleaning liquid supplied into the needle to completely clean the injection port and the flow channel in the injection valve. The invention of claim 14 relates to the liquid chromatograph according to claim 10, wherein the needle having the cleaning liquid sucked therein is inserted into the injection port having been cleaned, and the injection valve is switched to enable the cleaning liquid to be delivered into and discharged out of the flow channel in the injection valve. As a result, it is possible to exactly clean the flow channel in the injection valve after the injection port is cleaned.

The invention of claim 15 relates to the liquid chromatograph according to claim 10, further comprising cleaning liquid which is the same as or identical to a elution solvent and which is stored in the cleaning port after being cleaned, sent to the injection valve switched to a sample injection state and delivered in the flow channel in the injection valve and a sample loop to enable the liquid to be discharged out. As a result, it is possible to substitute the cleaning liquid the same as or identical to the elution solvent for the cleaning liquid remaining in the injection valve and initialize the autosampler. The invention of claim 16 relates to the liquid chromatograph according to claim 10, wherein the cleaning port has a discharge spout disposed immediately above the injection port to enable cleaning liquid which is the same as or identical to an elution solvent sent out to the cleaning port to be supplied to the injection port. As a result, the cleaning liquid is sent to the injection valve via the cleaning port to flush out the flow channel with the cleaning liquid, thereby initializing the autosampler.

### Effects of the Invention:

According to the invention of claim 1, since the injection valve is disposed on the upper one side within the oven kept in a constant temperature, the mixer and the introduction side of the column are disposed at the position closed to the injection valve via the tubing, the detection portion of the detector is disposed at the position close to the exit side of the column via the column, an injection piece having an injection port into which the needle can be inserted is disposed on one side of the autosampler immediately above the injection valve and the injection port is provided so that the injection port may connect with the flow channel of the injection valve, the injection valve and injection port are allowed to connect with each other at the shortest distance, with the connection tubing between the two omitted, the tubing between the injection valve and the mixer, between the injection valve and the introduction side of the column and between the exit side of the column and the detection portion of the detector are plumbed in their respective shortest lengths to reduce the dead volumes in these tubing, thereby suppressing diffusion of the sample liquid and correctly obtaining the concentration gradient relative to the direction of flow of the mobile phase to thereby enhance the analytical precision, set the injection valve, mixer column and detection portion of the detector in the same analytical environment, suppress the influence resulting from the change in temperature, obtain the analysis reliability and rationalize the maintenance of these constituent elements. Furthermore, since the detection portion of the detector is disposed within the oven, the effects of preventing the enlargement in size of the oven and the variation in temperature distribution, suppressing the enlargement in size of the LC system and realizing the safety and exactitude of injecting the sample with the needle via the injection port.

According to the invention of claim 2, since the detection portion of the detector is installed at the position which is close to the column and which is movable and adjustable so as to be corresponding to the position of the column, it is possible to compactly dispose the detection portion rationally, realize the shortest plumbing of the tubing for connection between the column and the detection portion and reduce the dead volume in the tubing. According to the invention of claim 3, since the column is installed at the position movable and adjustable in the three-dimensional direction relative to the injection valve or switching valve and the detection portion of the detector, it is possible to compactly dispose the column and injection valve or the switching valve and detection portion of the detector rationally, realize the shortest plumbing of the tubing for connection between them and reduce the dead volume in the tubing. According to the invention of claim 4, since at least one switching valve is provided as being disposed closed to the injection valve within the oven, it is possible to realize the shortest plumbing of the tubing for connection between them, reduce the dead volume in the tubing, eliminate cumbersome steps of performing the installation required for the external installation of the switching valve and securing the installation space, and obtain the switching valve exhibiting sharp peaks without being influenced by room temperature and obtain stable repeatability and, by connecting separation columns different in separation mode from each other to plural switching valve, for example, it is possible to obtain larger peak capacity and reply to complicated separation of the samples.

According to the invention of claim 5, since the needle has the lower end disposed in linear contact with the lower portion of the injection port, it is possible to suppress the area of contact between the injection port and the needle and prevent contamination by the contact portion from occurring while establishing the injection precision. According to the invention of claim 6, since the injection port has the lower end portion connected to the injection valve with screws and is provided in the upper peripheral surface with the pair of notched portions with which the tool is able to engage, it is possible to connect the injection port and injection valve with exactitude and, when connecting these, engage the wrench with the notched portions to perform firm installation with ease. According to the invention of claim 7, since the plural liquid-sending pumps are disposed immediately below the mixer so as to enable the elution solvents to be sent and discharged via the tubing, it is possible to plumb the tubing in the respective shortest lengths, reduce the dead volume in each of the tubing and enhance the analytical precision.

According to the invention of claim 8, since plural separation columns different in separation mode from each other are further provided and at least one switching valve comprises plural switching valves which are disposed within the oven so as to be able to communicate with one another and which are connected to the separation columns, the effects of allowing the constituent elements and plural switching valves to exhibit sharp peaks without being affected by room temperature and obtaining stable repeatability are fulfilled. According to the invention of claim 9, since the plural separation columns comprise the one-dimensional separation column and the two-dimensional separation column and the plural switching valves comprise two switching valves, one connected to the one-dimensional separation column and the other to the two-dimensional separation column, it is expected to obtain larger peak capacity, promote to build up the two-dimensional liquid chromatography enabling the separation for the complicated sample to work well and fulfill sufficient performance as the main apparatus for the proteomic analysis.

According to the invention of claim 10, since the injection port into which the needle can be inserted and plural cleaning ports capable of storing therein different cleaning liquids are disposed on one side within the autosampler immediately above the injection valve and disposed apart from the sample tray, the injection port is allowed to communicate with the flow channel of the injection valve and the needle can be inserted into and detached from the injection port, it is possible to separate the region of movement of the needle during the cleaning and the plural cleaning ports from the periphery of the sample tray, obviate falling of the sample liquid or cleaning liquid having adhered to the needle into the sample bottles and admixing it with the samples in the sample bottles, prevent occurrence of cross-contamination and safely and exactly clean the injection port and the flow channel in the injection valve using the needle and injection port.

According to the invention of claim 11, since the needle is airtightly engaged with the injection port allowed to communicate with the flow channel of the injection valve, and the cleaning liquid supplied into the needle is moved to the injection port and the flow channel of the injection valve, thereby discharging the cleaning liquid outside of the injection valve, the injection port and the flow channel in the injection valve can be cleaned. According to the invention of claim 12, since the suction and discharge means coordinating an end of the needle into which the sample liquid has been injected and which has been immersed in the cleaning liquid stored in the cleaning port is further provided to enable the cleaning liquid to be sucked into and discharged from the needle, the cleaning liquid can make a movement into and out of the needle to enable the movement to precisely clean the inside of the needle.

According to the invention of claim 13, since the needle into which the sample liquid has been injected is retained above and apart from the injection port, and the cleaning liquid is capable of being supplied into the needle, allowed to drop or flow downward into the injection port and moved in the flow channel in the injection valve and discharged outside the injection valve, it is possible to avoid contact between the needle having adhered the sample liquid thereto and the injection port to enable the cleaning liquid supplied into the needle to completely clean the injection port and the flow channel in the injection valve. According to the invention of claim 14, since the needle having the cleaning liquid sucked therein is inserted into the injection port having been cleaned, and the injection valve is switched to enable the cleaning liquid to be moved into and discharged out of the flow channel in the injection valve, it is possible to enable the cleaning liquid to be discharged from the valve and exactly clean the flow channel in the injection valve after the injection port is cleaned.

According to the invention of claim 15, further comprising the cleaning liquid the same as or identical to the elution solvent is further provided, stored in the cleaning port after being cleaned, sent to the injection valve switched to the sample injection state and moved in the flow channel in the injection valve and the sample loop to enable the liquid to be discharged out, it is possible to substitute the cleaning liquid the same as or identical to the elution solvent for the cleaning liquid remaining in the injection valve and initialize the autosampler. According to the invention of claim 16, since the cleaning port has the discharge spout disposed immediately above the injection port to enable the cleaning liquid which is the same as or identical to the elution solvent sent out to the cleaning port to be supplied to the injection port, it is possible to supply the cleaning liquid to the injection valve via the cleaning port, flush out the flow channel with the cleaning liquid and initialize the autosampler.

### Brief Description of the Drawings:

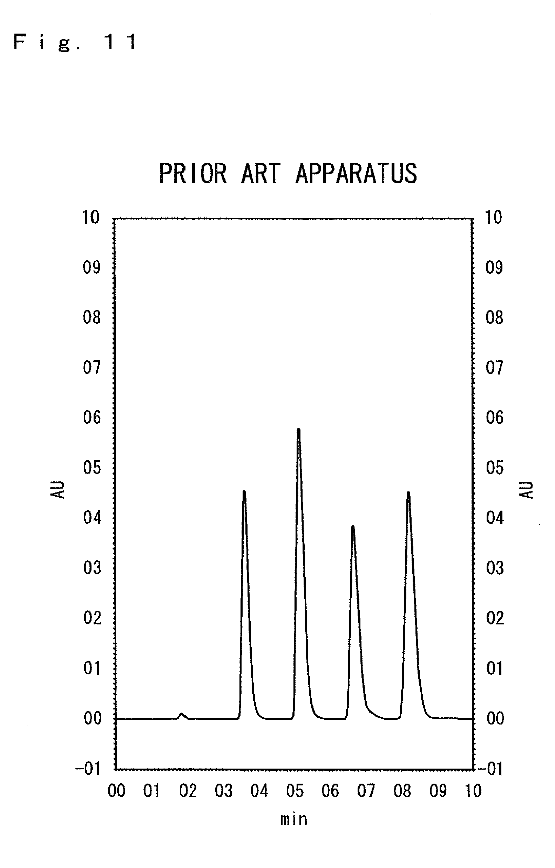

[Figure 11 It is a front view of the LC system according to the present invention (the doors of bottom body is omitted.
[Figure 2] It is an enlarged front view of the oven installed with flow cell including detection unit shown in Figure 1.
[Figure 3] It is a schematic diagram of an autosampler applied in the present invention.
[Figure 4] It is a front view showing an enlarged principal cleaning unit equipped with the autosampler applied in the present invention.
[Figure 5] It is a plan view showing the enlarged principal cleaning unit equipped with the autosampler applied in the present invention.

[Figure 6] It is an enlarged cross section taken along line A-A in Figure 5.
[Figure 7] It is an enlarged cross section taken along line B-B in Figure 5.
[Figure 8] It is an enlarged cross section showing a state of connection between an injection valve and an injection port applied in the present invention.
[Figure 9] It is an enlarged cross section showing the principal part of Figure 8, in which the state of contact between an injection port and a needle.

[Figure 10] It is a chromatogram obtained by the liquid chromatograph according to the present invention.
[Figure 11] It is a chromatogram obtained by the liquid chromatograph according to the prior art.
[Figure 12] It is a schematic diagram of an autosampler applied in the second embodiment of the present invention.
[Figure 13] It is an enlarged front view of the oven installed with flow cell including detection unit applied in the second embodiment of the present invention.
[Figure 14] It is a schematic diagram of an LC system applied in the third embodiment in which the second embodiment is applied.

### Best Mode for carrying out the Invention:

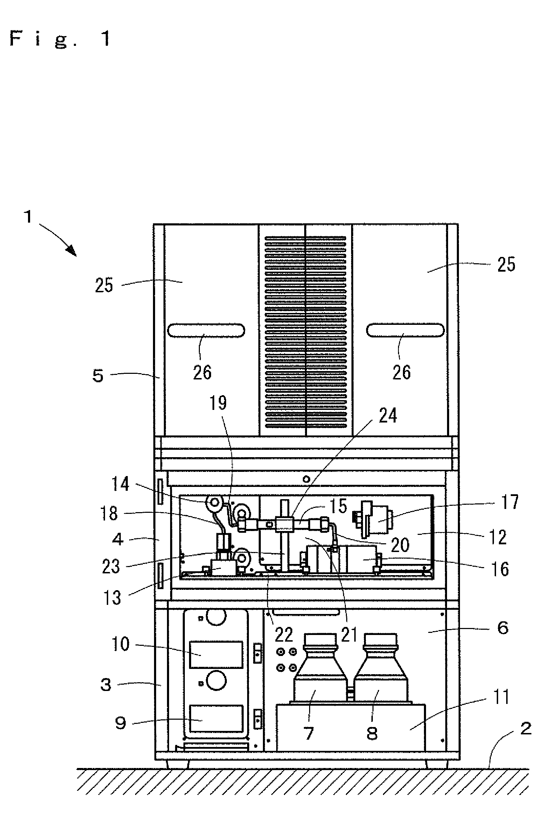

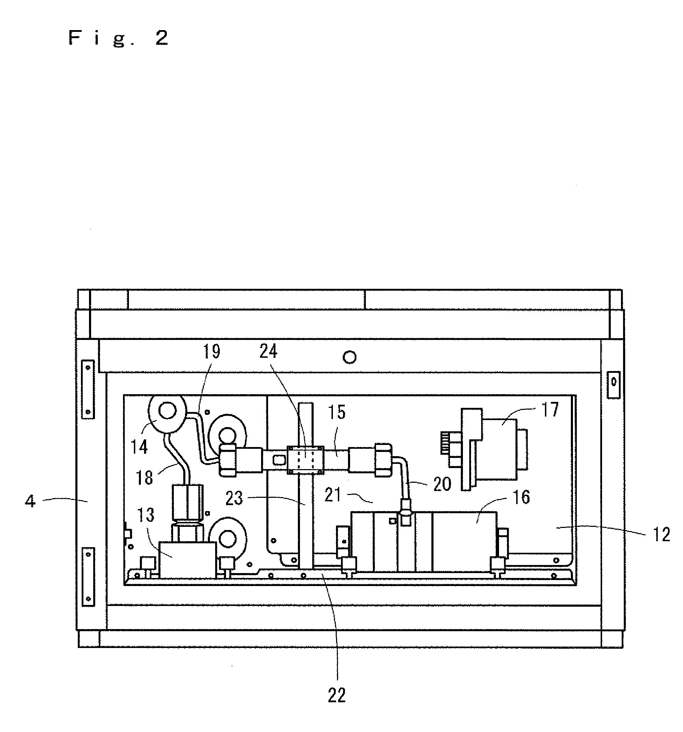

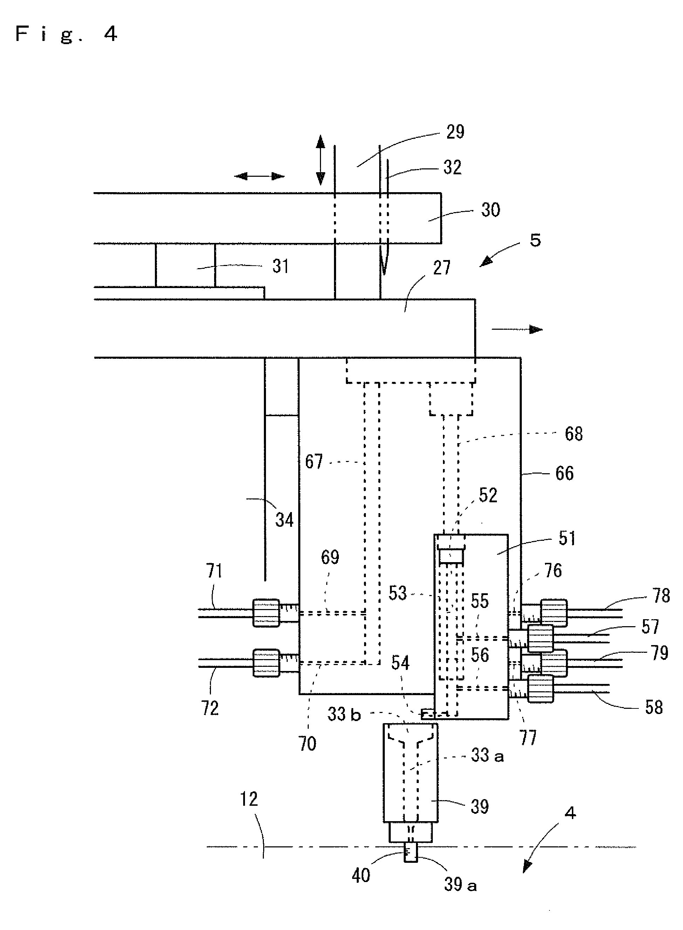

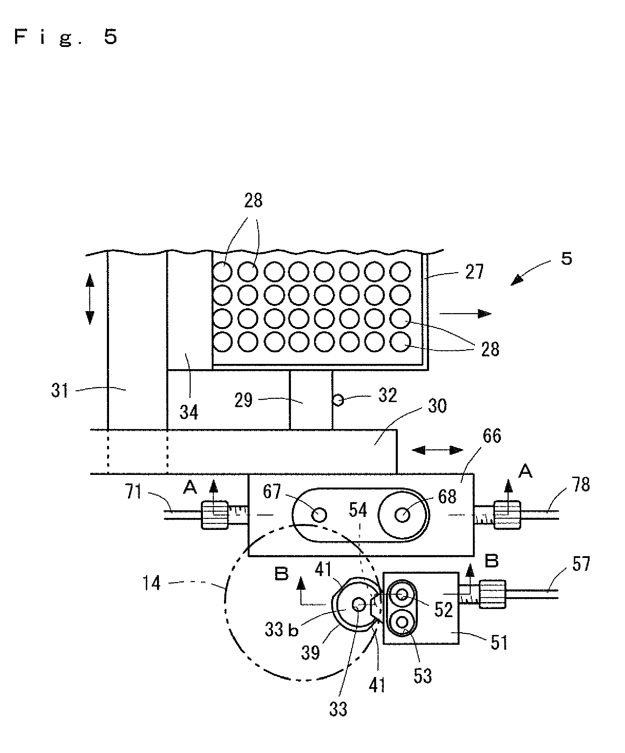

An embodiment of an LC system for a high-performance liquid chromatograph according to the present invention is shown in Figures 1 to 11, in which reference numeral 1 denotes the LC system disposed on a floor surface 2. The LC system 1 comprises a mobile phase liquid-sending unit 3, a measurement portion unit 4 and an autosampler 5 that constitutes a sample introduction portion unit and is disposed, with housings for these units stacked one on top of another.

Of these units, the mobile phase liquid-sending unit 3 is disposed at the lowest position of the LC system and a horizontally long housing 6 for it is provided the opposite sides of the front side thereof with a clamshell door (not shown). Solvent containers 7 and 8 having different kinds of mobile phase solvents stored therein are accommodated in the inside of the housing 6. To one side of the housing 6, liquid-sending pumps 9 and 10 for mobile phase elution solvents are connected via tubing (not shown). In the figures, reference numeral 11 denotes a container holder for accommodating the solvent containers 7 and 8.

The measurement portion unit 4 is disposed on the mobile phase liquid-sending unit 3, and the unit 4 constitutes a oven 12 comprising a horizontally long housing having the same width as the housing 6. The inside temperature of the oven 12 can be adjusted to a prescribed temperature and, to one side of the front side thereof, a door (not shown) is air-tightly attached. In the oven 12, a mixer 13, an injector or injection valve 14, a column 15 and one or both of a detection portion 16 of a UV-VIS detector or a laser excitation fluorescence detector adopted in accordance with species to be analyzed and a detection portion 17 of an electrochemical detector (ECD) are disposed. By disposing control and calculation portions, a light source and the like other than the detection portions of the detectors outside the oven 12 while making it possible to set these members in the same analytical environment or under the same temperature conditions, it is made possible to suppress the oven 12 or LC system from being larger in size.

The detection portions of the detector in the UV-VIS detector and laser excitation fluorescence detector, used herein, indicate units each comprising a flow cell into which a sample solution to be detected flows, a simple optical system for adjusting incident light led via optical fibers from a light source and a light source adjustment portion disposed outside the oven 12 or excitation light and a sensor for sensing transmitted light or fluorescence obtained from the flow cell and sending signals to the control and calculation portions disposed outside the oven. In addition, the detection portion of the electrochemical detector indicates a flow cell unit having a working electrode, an opposite electrode and a reference electrode. Incidentally, a detector provided with a detection portion and having a size capable of being disposed within the oven 12, besides the aforementioned detectors, can also be adopted.

On the other hand, when using a detector that cannot be disposed within the oven 12, such as a mass analyzer, a connection tubing is disposed as extending from a through-hole (not shown) formed in the side surface of the exit side of the column 15 of the oven 12 and connected to the mass analyzer, thereby enabling the tubing to have a length as short as possible.

Of the aforementioned constituent elements, the mixer 13 is disposed immediately above the liquid-sending pumps 9 and 10 and a tubing (not shown) for connecting these is installed as being minimized in length to thereby reduce the dead volume of that portion and, at the same time, enable the solvent in the solvent containers 7 and 8 to be mixed to have a prescribed composition. In the present embodiment, a gradient mixer having a low volume (25 to 500 uℓ) is used as the mixer 13.

The injector 14 is constructed of an injection valve comprising a six-port changeover valve and disposed immediately above the mixer 13 and a tubing 18 for connecting these is installed as being minimized in length to thereby reduce the dead volume of that portion and, at the same time, enable the solvents mixed with the mixer 13 to be rapidly sent to the injection valve 14. The injection valve 14 is disposed at the vicinity of the introduction side of the column 15 and a tubing 19 for connecting these is installed as being minimized in length to thereby reduce the dead volume of that portion and, at the same time, enable the mixed solvents to be rapidly sent to the column 15.

The column 15 is disposed, with its lead-out side positioned immediately above the introduction portion of the detection portion 16 or 17 and a tubing 20 for connecting these is installed as being minimized in length to thereby reduce the dead volume of that portion. The lengths of the tubings 19 and 20 are designed as being minimized in accordance with the shape dimensions of the detection portion 16 or 17 and, to attain connection thereof, the position at which the column 15 and the detection portion 16 or 17 are attached is to be adjustable as described later.

The detection portion is selected based on the detector to be used in accordance with the analysis conditions and, when the UV-VIS detection has been adopted, the detection portion 16 of the UV-VIS detector is used, whereas the detection portion 17 of the electrochemical detector is used in the case of the electrochemical detection. Otherwise, in the case of the fluorescence light, a detection portion (not shown) of the laser excitation fluorescence detector is used.

At these detection portions, optical fibers for leading incident light or excitation light to the detection portion or cables for applying voltage to the detection portion are connected to cables for transmitting signals sensed with the sensor and the like formed on the detection portion (not shown). In this case, the light source or voltage application portion and the processing and calculating portion for signals sensed with the sensor are disposed outside the oven 12 to suppress the oven 12 or LC system from being larger in size.

Therefore, since the detection portion 16 or 17 can be disposed just proximal to the exit side of the column as compared with that embedded in the housing of the conventional detector, the tubing 20 for the column 15 and the detection portion 16 or 17 can be installed as being minimized in length to enable the dead volume at that portion to be reduced accordingly. In the present embodiment, a detection portion having a low volume (0.2 to 3 pℓ) is used as the detection portion 16 or 17.

The column 15 and detection portion 16 or 17 are disposed as extending from one side of the oven 12 over the center portion thereof. Fixed rails 22 are laid right and left on the bottom of the reservoir within a storage space 21 thereof for the column and detection portion. Mounting feet (not shown) for the detection portions 16 and 17 can easily be fixed along the fixed rails 22 with screws. Installation rails (not shown) formed therein with a plurality of through-bores (not shown) are mounted onto the fixed rails 22 in an anteroposterior direction, and a support rod 23 is provided upright in one of the through-bores with a screw.

Paired column holders 24 of different shapes are slidably attached to the support rod 23. The column 15 is sandwiched between the holders 24 so that the mounting position thereof may be adjustable from right to left, up and down and backward and forward, i.e. in the three-dimensional direction. That is to say, the column 15 moves from right to left, up and down and backward and forward, i.e. in the three-dimensional direction, along the fixed rails 22, installation rails and support rod 23 in order to install the injection valve 14 and detection portion 16 or 17 using the tubings 19 and 20 on the opposite sides, thereby enabling compact and rational installation thereof to be realized.

The autosampler 5 is disposed on the measurement portion unit 4, and paired right and left doors 25 are attached to the front portion of the housing for the autosampler. Reference numeral 26 denotes observation windows formed in the doors 25. Multiple sample bottles 28 can be stored on a boxy sample tray 27 provided on the lower portion of the housing for the autosampler 5.

The sample tray 27 is provided on one side thereof with a Z-guide 29 which is movable vertically and which coordinates a Y-guide 30 which is movable in the anteroposterior direction and which coordinates an X-guide 31 movable in the horizontal direction. The actuation of the Z-, Y and X-guides 29 to 31 is controlled by means of a controller (not shown), and the Z-guide 29 is moved in the three-dimensional direction to move a needle to sample bottles, injection ports and each cleaning port to be described later, thereby enabling samples or cleaning liquid to be absorbed and discharged and the internal and external portions of the needle, the injection port and the flow channel in the injection valve to be cleaned.

That is to say, the Z-guide 29 is moved to the position of a prescribed sample bottle 28 together with a needle 32 attached to the Z-guide 29 and moved to immediately above the prescribed sample bottle 28 to descend, thereby enabling a sample solution (not shown) in the sample bottles 28 to be sucked by a prescribed amount. Thereafter, the needle 32 is caused to ascend and moved to immediately above an injection port 33 to descend and, after being inserted into the injection port, enabled to discharge the sucked sample solution. In the figures, reference numeral 34 denotes a tray cabinet for storing the sample tray 27.

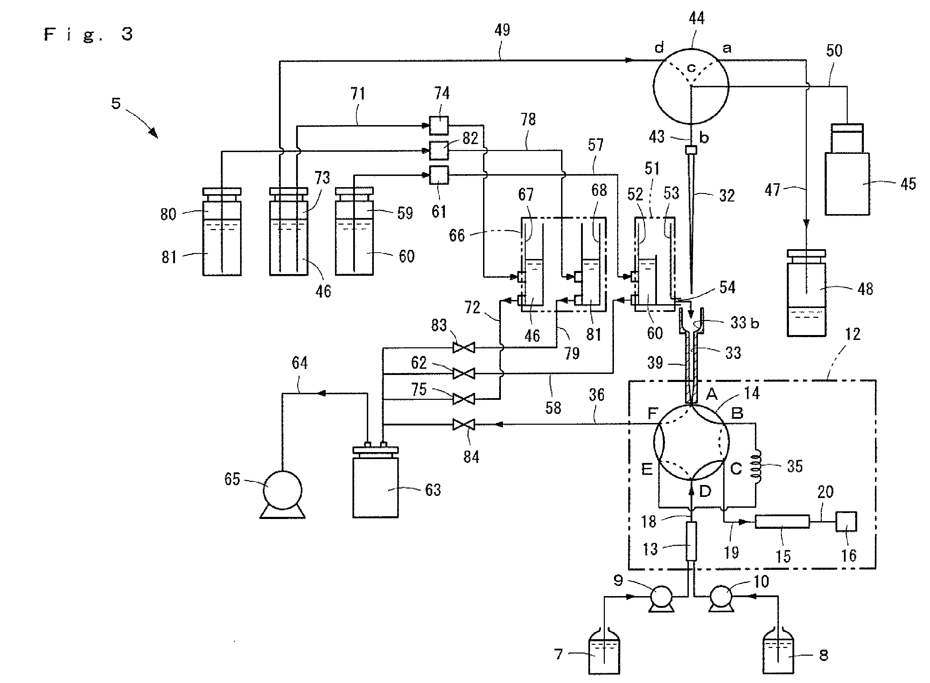

The injection valve 14 is formed therein with six loop flow channels communicating with ports *A* to *F*, and the flow channels shown by solid lines in Figure 3 can selectively switched to the flow channels shown by broken lines therein, and vice versa. The injection valve shown in Figure 3 is switched to a state of sample injection and, in this state, the ports *A* and *B*, ports *C* and *D* and ports *E* and *F* are allowed to communicate with each other, respectively, and sample liquid can be injected via the needle 32 and injection port 33 into a sample loop 35 provided between the ports *B* and *E*.

After injecting the sample liquid into the sample loop 35, the injection valve 14 is switched to a state of measurement. The mixed solvent is send out to the sample loop 35 via the liquid-sending pumps 7 and 8, and the resultant mixed solvent having the sample liquid placed thereon is sent to the column 15 where the sample liquid is separated into components and, thus, the components can be detected using the detection portion 16 or 17. That is to say, in the injection valve 14, the tubing 19 has one end thereof connected to the port *C* and the other end thereof connected to the column 15, the tubing 18 has one end thereof connected to the port *D* and the other end thereof connected to the mixer 13, and a tubing 36 has one end thereof connected to the port *F* and the other end thereof connected to a waste liquid bottle to be described later.

On the front side of the injection valve 14, the port *A* opens upward and has the inside thereof formed into a substantially funnel pore stepwise reduced in diameter and the bottom thereof communicating with a loop flow channel 37. The upper opening of the port *A* is provided with a threaded portion 38 onto which a threaded portion 40 formed on a diameter-reduced lower portion 39a of an injection port 39 is screwed.

The injection port 39 is formed of a chemical resistant synthetic resin and molded into a substantially cylindrical shape, and has the inside thereof provided with the substantially funnel injection port 33 stepwise reduced in diameter. The injection port 39 is disposed apart from the sample tray 27. In the figures, reference numerals 41 and 41 denote notched portions formed in parallel in the outer circumferential surface of the injection port 39 and can be engaged with a tool, such as a wrench (not shown), to enable the injection port 39 to be assembled with the wrench.

The injection port 33 is provided on the lower side thereof with a tapered surface 33a downward reduced in diameter. The tapered surface 33a is polished smoothly and can be engaged with the lower end of the needle 32. The portions of engagement between the two come into linear contact with each other to suppress the area of contact as small as possible and, when injecting the sample liquid, it is possible to suppress carry-over of the sample liquid adhering to the outside of the needle 32 and prevent cross-contamination. In the figures, reference numeral 33b denotes a liquid-pooling portion formed by having the upper end of the injection port 33 increased in diameter.

The needle 32 is movable in the three-dimensional direction by means of the operations of the X-, Y and Z-guides 29 to 31 and is further movable in the vertical direction independently of the operations of the X-, Y and Z-guides 29 to 31 and, during the cleaning operation, the area of the movement of the needle 32 is set to be separated apart from the sample tray 27.

That is to say, in the entire process, the needle 32 moves toward sample bottles (not shown), injection port 33 and each cleaning port to be described later, injects the cleaning liquid into the injection valve 14 via the injection port 33 and thereafter has the inside thereof injected with the cleaning liquid or is immersed in the cleaning liquid at the injection port 33 to enable the inside and outside thereof to be cleaned. The needle 32 is made of a stainless steel tube having a small diameter and the inside thereof is formed therein with a through-hole, the upper end of which communicates with a changeover valve 44 via a tubing 43.

The changeover valve 44 has four ports *a* to *d,* of which a common port *c* communicates via a tubing 50 with a micropump 45 that is needle suction and discharge means and, by the operation of the micropump 45, sample liquid or high-power cleaning liquid 46 is sucked to discharge and inject the sample liquid I to the injection valve 14 and enable the high-power cleaning liquid 46 to fall in drops or travel downward immediately above the injection port 33.

The changeover valve 44 is formed therein with three loop flow channels which communicate with the ports *a* to *d* and which can selectively switched to either the loop flow channels shown by the solid lines in Figure 3 or the loop flow channels shown by the broken lines therein. Of these ports, the port *a* communicates with a waste liquid bottle 48 via a tubing 47, the port *b* with the needle 32 via the tubing 43 and the port *d* with the high-power cleaning liquid 46 via a tubing 49.

A first cleaning block 51 is disposed immediately above the injection port 39 and apart from the sample tray 27 and provided therein with first and second normal cleaning ports 52 and 53. The upper openings of the first and second normal cleaning ports 52 and 53 communicate with each other. Overflow of the first normal cleaning port 52 is allowed flow into the second normal cleaning port 53 and can be supplied from a lower discharge spout 54 to the injection port 33 disposed immediately below the discharge spout.

The first normal cleaning port 52 has an introduction passage 55 and an exhaust passage 56 to which one ends of tubings 57 and 58 are connected, respectively. The other end of the tubing 57 is plumbed within a normal cleaning liquid storage bottle 59 to enable inside normal cleaning liquid 60 to be sent out to the first normal cleaning port 52 with a liquid-sending pump 61. The other end of the tubing 58 is connected via a stop valve 62 to a waste liquid bottle 63 that communicates with an intake pump 65 via a tubing 64 and, by opening the stop valve 62 to drive the intake pump 65, the normal cleaning liquid 60 within the first normal cleaning port 52 can be discharged out into the waste liquid bottle 63.

A second cleaning block 66 is disposed at a position within the cleaning block 51 and apart from the sample tray 27. The second cleaning block 66 has a larger size than the first cleaning block 51 and is formed therein with a high-power cleaning port 67 and a neutral cleaning port 68 having their respective upper openings communicating with each other.

The high-power cleaning port 67 has an introduction passage 69 and an exhaust passage 70 to which one ends of tubings 71 and 72 are connected, respectively. The other end of the tubing 71 is plumbed within a high-power cleaning liquid storage bottle 73 to enable inside high-power cleaning liquid to be sent to the high-power cleaning port 67 with a liquid-sending pump 74.

The other end of the tubing 72 is connected to the waste liquid bottle 63 via a stop valve 75 and, by opening the stop valve 75 to drive the intake pump 65, the high-power cleaning liquid 46 within the high-power cleaning port 67 can be discharged out into the high-power cleaning port 67. In addition, the neutral cleaning port 68 has an introduction passage 76 and an exhaust passage 77 to which one ends of tubings 78 and 79 are connected, respectively. The other end of the tubing 78 is plumbed within a neutral cleaning liquid storage bottle 80 to enable inside neutral cleaning liquid 81 to be supplied to the neutral cleaning port 68 with a liquid-sending pump 82.

The other end of the tubing 79 is connected to the waste liquid bottle 63 via a stop valve 83 and, by opening the stop valve 83 to drive the intake pump, the neutral cleaning liquid 81 within the neutral cleaning port 68 can be discharged out into the waste liquid bottle 63. In the figures, reference numeral 84 denotes an intervening stop valve inserted on the tubing 36 that connects the port F of the injection valve 14 to the waste liquid bottle 63.

Of the cleaning liquids 46, 60 and 81, the high-power cleaning liquid 46 exhibits the most powerful cleaning effect and, as it, an organic solvent, such as acetonitrile, is adopted. It is noted, however, that when an eluting solution and cleaning liquid has been mixed with each other, deposition and precipitation arise possibly depending on the kind of the eluting solution combined with the cleaning liquid. In the present embodiment, the high-power cleaning liquid 46 is used for cleaning the inside and outside surfaces of the needle 46 and the loop flow channels within the injection port 33 and injection valve 14.

Furthermore, liquid having the same composition as the mobile phase used for the analysis is used as the normal cleaning liquid 60. In the present embodiment, the normal cleaning liquid 60 is used for cleaning other loop flow channels including the injection port 33 and sample loop 35 within the injection valve 14.

Though the neutral cleaning liquid 81 is inferior in detergency to the high-power cleaning liquid 43, it is constructed to have a composition not to induce the deposition and precipitation when being mixed with an eluting solution. In the present embodiment, the neutral cleaning liquid 81 is used for cleaning the inside and outside surfaces of the needle 32 and injection port 33.

With respect to the cleaning timing and cleaning process for the sections to be cleaned, the cleaning by the present invention is divided into cleaning of the outside of the needle 32 after sucking the sample liquid, cleaning of the injection port 33 and injection valve 14 immediately after the injection of the sample liquid, cleaning of the inside and outside of the needle 32 and cleaning of the injection port 33 after the injection of the sample liquid, cleaning of the inside and outside of the needle 32 and cleaning of the injection port 33 after the analysis, cleaning of the injection valve 14 after the analysis, and liquid substitution after the analysis. In addition, the cleaning method is divided into cleanings using the cleaning liquids 46, 60 and 81 different in detergency.

At first, the cleaning of the needle 32 after the suction of a sample aims at cleaning the sample liquid having adhered to the outside of the needle 32 when the needle 32 inserted into the sample liquid has sucked the sample liquid. In this cleaning, the needle 32 is moved to immediately above the second cleaning block 66, allowed to descend and inserted into the high-power cleaning port 67 and thereafter by closing the stop valve 75 to drive the liquid-sending pump 74, sending the high-power cleaning liquid 46 to the high-power cleaning port 67 and immersing the needle 32 in the high-power cleaning liquid 46, the outside of the needle 32 can be cleaned.

After the aforementioned cleaning, the needle 32 is pulled up from the high-power cleaning port 67, the stop valve 75 is opened to drive the intake pump 65, and the used cleaning liquid 46 within the high-power cleaning port 67 is discharged out into the waste liquid bottle 63.

Next, the cleaning of the needle 32 immediately after the injection of the sample liquid I to the injection valve 14 aims at cleaning through thorough discharge of the sample liquid remaining inside of the needle 32, inside of the injection port 33 and in the vicinity of the port *A* of the injection valve 14.

It is intended that the aforementioned cleaning is performed, with the state of injection of the sample liquid, in which the needle 32 has been inserted into the injection port 33, maintained. During the cleaning, the high-power cleaning liquid 46 sucked via the changeover valve 44 with the micropump 45 is pushed out to the needle via the changeover valve 44 and discharged out into the injection port 33 from the distal end portion of the needle 32.

The high-power cleaning liquid 43 is discharged from the injection port 33 via the ports *A* to *F* of the injection valve 14, lead to the tubing 36 and discharged out into the waste liquid bottle 63. In this case, when suction of and cleaning with the high-power cleaning liquid 43 are repeated, then the inside of the needle 32, the injection port 33 and the inside of the injection valve 14 can precisely be cleaned.

Cleaning of the inside and outside of the needle 32 and of the injection port 33 after the injection of the sample aims at cleaning the sample liquid having adhered to inside and outside of the needle 32 and to the injection port 33 after the injection of the sample liquid into the injection valve 14. The aforementioned cleaning is selected from the cleaning of the inside and outside of the needle 32 and the cleaning of the injection port 33 using the high-power cleaning liquid 46 and neutral cleaning liquid 81 depending on the cleaning conditions.

At first, when cleaning the inside and outside of the needle 32 with the high-power cleaning liquid 46, the needle 32 is moved to immediately above the second cleaning block 66, allowed to descend and inserted into the high-power cleaning port 67 and thereafter, by switching the changeover valve 44 to drive the micropmp 45, the high-power cleaning liquid 46 is sucked or discharged. Thereafter, the stop valve 75 is opened to drive the intake pump 65, thereby discharging the used high-power cleaning liquid 46 out into the waste liquid bottle 63 to perform cleaning of the inside of the needle 32 with high-power cleaning liquid 46.

After cleaning the inside of the needle 32, the stop valve 75 is closed to drive the liquid-sending pump 74, thereby sending the high-power cleaning liquid 46 to the high-power cleaning port 67, with the needle 32 kept inserted into the high-power cleaning port 67, and immersing the needle 32 in the cleaning liquid 46 to perform the cleaning of the outside of the needle.

After cleaning the outside of the needle 32, the stop valve 75 is opened to drive the intake pump 65, thereby discharging the used high-power cleaning liquid 46 out into the waste liquid bottle 63. In this case, the cleaning of the inside and outside of the needle 32 with the high-power cleaning liquid 46 is repeated to enable the inside and outside of the needle 32 to be cleaned precisely.

Next, when cleaning the inside and outside of the needle 32 with the neutral cleaning liquid 81, the neutral cleaning liquid 81 is supplied to the neutral cleaning port 68 via the tubing 78 until the port is filled with the neutral cleaning liquid 81. With this state maintained, the needle 32 is moved to immediately above the second cleaning block 66, allowed to descend and inserted into the neutral cleaning port 68 and, thereafter, suction and discharge of the neutral cleaning liquid 81 relative to the inside of the needle 32 are repeated to clean the inside of the needle 32.

After cleaning the inside of the needle 32, the used neutral cleaning liquid 81 is discharged out into the waste liquid bottle 63. In this case, since the needle 32 is immersed in the neutral cleaning liquid 81, the outside of the needle 32 is, as a matter of practice, also cleaned with the neutral cleaning liquid 81 at the same time.

Next, the micropump 45 and high-power cleaning liquid bottle 73 are allowed to communicate with each other and, after the micropump 45 is operated for suction, the micropump 45 and needle 32 are allowed to communicate with each other, thereby cleaning the inside of the needle 32 through introduction of the high-power cleaning liquid 46 into it. After thus cleaning the inside of the needle 32 with the high-power cleaning liquid 46, the intake pump 65 is driven to discharge the used high-power cleaning liquid 46 out into the waste liquid bottle 63.

In this way, the inside of the needle 32 is cleaned with the neutral cleaning liquid 81 and high-power cleaning liquid 46 in this order. The cleaning with the neutral cleaning liquid 81 that will not possibly generate deposition and precipitation is first performed, and the high-power cleaning liquid 46 exhibiting the powerful cleaning effect is then used for performing exact and complete cleaning to cope with the characteristics of the sample liquid.

After cleaning the inside of the needle 32, the outside thereof is cleaned. In this case, the neutral cleaning liquid 81 is sent to the neutral cleaning port 68 into which the needle 32 has been inserted and the cleaning port 68 is filled with the neutral cleaning liquid 81 to immerse the needle 32 therein, thereby cleaning the outside of the needle. Thus, after cleaning the outside of the needle 32 with the neutral cleaning liquid 81, the used neutral cleaning liquid 81 is discharged out into the waste liquid bottle 63.

On the other hand, since the process of cleaning the injection port 33 and the inside of the injection valve 14 with the high-power cleaning liquid 46 is performed during the analysis made after the injection of the sample, the loop flow channel of the injection valve 14 is switched from the state shown by the broken line in Figure 3 to the communication state shown by the solid line therein, thereby allowing the port *A* and *F* to communicate with each other via the loop flow channel and the port *F* to communicate with the waste liquid bottle 63 via the tubing 36 and stop valve 84 in the opened state to thereby allow the intake pump 65 to communicate with the waste liquid bottle 63.

At that time, since the cleaning is performed over the injection port 33 and the inside of the injection valve 14, it is necessary to avoid the situation in which the sample liquid having remained in the injection port 33 adheres to the needle 32. For this reason, the needle 32 having the sample liquid injected therein is moved together with the Z-, Y- and X-guides 29 to 31 or moved independently to immediately above the injection port, thereby retaining the needle 32 and the injection port as being separated from each other, thus bringing the two to a non-contact state.

Under these circumstances, the high-power cleaning liquid 46 is dropped or allowed to flow from the lower portion of the needle 32 into the injection port 33, guided into the tubing 36 via the ports A and F and discharged out into waste liquid bottle 63 through opening of the stop valve 84. In this case, repetition of the operation of dropping or flowing down the high-power cleaning liquid 46 enables the cleaning to be performed precisely.

On the other hand, though the process of cleaning the injection port 33 and the inside of the injection valve 14 with the neutral cleaning liquid 81 is fundamentally the same as the process using the high-power cleaning liquid 46, the neutral cleaning liquid 81 cannot be sucked with the micropump 45 through switching of the changeover valve 44. For this reason, the stop valve 83 is closed to fill the neutral cleaning port 68 with the neutral cleaning liquid 81 using the liquid-sending pump 82, the needle 32 is moved to above the neutral cleaning port 68, allowed to descend and suck the neutral cleaning liquid 81 and moved to above the injection port 33, thereby allowing the neutral cleaning liquid 81 to drop or flow down.

Thus, the secondary cleaning of the inside of the injection valve 14 aims at cleaning the loop flow channel including the sample loop 35 after the primary cleaning of the injection valve 14, and the means for it comprises switching between the loop flow channels shown by the solid line and broken line in Figure 3 and discharging the sample liquid remaining in these flow channels to perform the cleaning.

At that time, the needle 32 sucks the high-power cleaning liquid 46 or neutral cleaning liquid 81 therein and is inserted into the injection port 33. In this case, since the cleaning of the injection port 33 has been terminated in the previous process, no problem of cross-contamination will be imposed even when the needle 32 is brought into contact with the injection port 33. Thereafter, the suctioned high-power cleaning liquid 46 or neutral cleaning liquid 81 is discharged out into the injection port 33, while keeping the stop valve 84 opened without operation the intake pump 65, to perform the cleaning.

On the other hand, the solvent substitution aims at substituting the normal cleaning liquid 60, i.e. the mobile phase, for the cleaning liquid still raining in the injection valve 14 and this process corresponds to initialization of the autosampler 5. At that time, the injection valve 14 is switched to the sample-injecting state shown in Figure 3 to cause the injection port 30, port *A* of the injection valve 14, port *B,* sample loop 32 and port *F* to communicate with one another.

In these circumstances, the normal cleaning liquid 60 is sent to the first normal cleaning port 52 using the liquid-sending pump 61 and, before the normal cleaning liquid 60 overflows from the cleaning port 52, the stop valve 62 is opened to drive the intake pump 65, thereby discharging the normal cleaning liquid 60 out into the tubing 58 to clean the interior of the first normal cleaning port 52.

Next, the stop valve 62 is closed, with the liquid-sending pump 61 actuated, to cause the normal cleaning liquid 60 to overflow from the first normal cleaning port 52, flow into the second normal cleaning port 53, flow from the lower discharge spout 54 downward to the liquid-pooling portion 30b and flow into the injection port 33. As soon as a sufficient amount of the normal cleaning liquid 60 overflows, driving of the liquid-sending pump 61 is stopped.

Thereafter, the stop valve 84 is opened to drive the intake valve 65, thereby guiding the normal cleaning liquid 60 having flowed into the injection port 33 to the sample loop 35, guiding it from the port *E* via the port *F* into the tubing 36 and discharging it out into the waste liquid bottle 63. Thus, the injection valve 14 is flushed out with the normal cleaning liquid 60 having the same composition as the mobile phase to initialize the autosampler 5.

The liquid chromatograph of the present invention thus configured comprises the mobile phase liquid-sending unit 3, measurement portion unit 4 and autosampler 5 that constitutes the sample introduction portion unit and has their housings disposed one on top of another. These housings are formed in the shape of a horizontally long rectangle to have different heights and make their front lateral widths equal, thereby unionizing the LC system and facilitating the fabrication and installation thereof.

Of these units, the mobile phase liquid-sending unit 3 at the lowest position has the solvent containers 7 and 8 disposed on one side thereof and the liquid-sending pumps 9 and 10 vertically disposed on the other side thereof. In addition, the measurement portion unit 4 at the intermediate position is equipped with the oven 12 having one side thereof provided with the detection portion 16 or 17 corresponding to the detector adopted in accordance with the kind of the analysis and the other side thereof provided with the mixer 13 immediately above which the injection valve 14 is disposed, the inlet portion of the column 15 is disposed at a position close to the valve 14, and the outlet portion of the column 15 is disposed immediately above the center of the detection portion 16.

Therefore, by placing the mixer 13 and injection valve 14, and the column 15 and detection portion 16 or 17 in the same analytical environment or under the same temperature conditions, the influence resulting from the change of the analytical environment can be suppressed. For this reason, the irrationality of requiring each constituent element to be placed in the corresponding analytical environment or under the corresponding temperature conditions can be improved to rationally fabricate the constituent element at low cost and rationally maintain it with ease.

Furthermore, the mixer 13 is disposed immediately above the liquid-sending pumps 9 and 10 and the length of the tube arrangement of their connection tubing can be minimized to attain reduction in dead volume in that portion and, at the same time, the mixer 13 is disposed immediately below the injection valve 14 and the length of the tube arrangement of the connection tubing 18 can be minimized to attain reduction in dead volume in that portion. In addition, by the minimized length of the tube arrangements of the tubings 18 and 19, the mixed solvent having passed through the mixer 13 can rapidly be sent to the injection valve 14.

Since the injection valve 14 is disposed not at the conventional autosampler, but in the vicinity of the introduction portion of the column 15 in the oven 12, the connection tubing 19 for these can be plumbed in the shortest length to enable the dead volume at that portion to be reduced and the mixed solvent to be rapidly sent from the mixer 13 to the column 15.

Furthermore, the column 15 has its lead-out side disposed at a position immediately above the introduction portion of the detection portion 16 or 17 and the tubing 20 for connection of these is plumbed in the shortest length to reduce the dead volume in that portion. At this moment, the detection portion 16 or 17 is connected to an optical fiber for leading light from a light source thereto or a cable for applying voltage thereto with only a cable for transmitting thereto a signal detected at the detection portion to enable the detection and, since the cable can be disposed near the column 15, the connection tubing between the column 15 and the detection portion can be plumbed in the shortest length as compared with the conventional case in which the detection portion is disposed in the housing, thereby enabling the dead volume in that portion to be reduced and the oven 12 or LC system to be suppressed from being large in size.

The length of the tubings 19 and 20 is designed to a shortest connection possible dimension so as to correspond to the shape and dimension of the column 15 and detection portion 16 or 17 to be connected to each other and, in order to realize this connection, the position at which the column 15 and detection portion 16 or 17 are to be connected is adjusted to dispose these from one side of the oven over the central portion thereof.

At first, the installation feet (not shown) of the detection portion 16 or 17 is placed on the fixed rails 22 in installing the detection portion and fixed with screws. Next, the support rod 23 is moved right and left of the fixed rails 22 in installing the column 15 and, at the same time, to the front-back direction of the installation rails (not shown), thereby fixing the support rod 23 upright at a desired position with screws.

By moving the pair of column holders 24 up and down along the support rod 23 and positioning the connection portions of the tubings 19 and 20 at the installation positions of the injection valve 14 and detection portion 16 or 17, the connection portions of the tubings 19 and 20 are fixed to fix the pair of column holders 24. In this way, the movement of the column 15 together with the tubings 29 and 20 in the three-dimensional direction is adjusted in accordance with the installation positions of the injection valve 14 and the detection portion 16 or 17 to enable each constituent element to be compactly disposed rationally.

The autosampler 5 is equipped with the sample tray 27 for storing a plurality of sample bottles 28, needle 32 moving onto the sample tray 27 in the three-dimensional direction and Z-, Y X-guides 29 to 31 for moving the needle 32 in the three-dimensional direction. The injection port 39 and the first and second cleaning blocks 51 and 66 are disposed at positions immediately above the injection valve 14 on one side of the autosampler. In this case, since the injection valve 14 is disposed within the oven 12, the space for the valve 14 can be applied to the storage space for the injection port 39 and cleaning blocks 51 and 66.

The injection port 39 and cleaning blocks 51 and 66 are made of synthetic resin resistant to chemicals, the injection port 39 is formed in a substantially cylindrical shape, and the first and second cleaning blocks 51 and 66 are formed into substantially boxy shapes different in size. Of these, the injection port 39 is formed therein with the injection port 33 and has the lower diameter-reduced portion 39a provided with the threaded portion 40 that is screwed into the threaded portion 38 of the port A formed in the upper side of the injection valve 14 to dispose the injection port 39 upright on the injection valve 14. At that time, a wrench is engaged with the notched portions 41 and 41 formed on the upper side of the injection port 39, thereby locking the injection port.

The first cleaning block 51 is formed therein with the first and second normal cleaning ports 52 and 53, and the discharge spout 54 is disposed immediately above the injection port 33. Respective one ends of the tubings 57 and 58 are connected to the introduction passage 55 and exhaust passage 56, the other end of the tubing 57 to the liquid-sending pump 61 for the normal cleaning liquid 60, and the other of the tubing 58 to the stop valve 62.

The second cleaning block 66 is formed therein with the high-power cleaning port 67 and neutral cleaning port 68 that are provided respectively with the introduction passage 69 and exhaust passage 70 and with the introduction passage 76 and exhaust passage 77 to which respective one ends of the tubings 71 and 72 and the tubings 78 and 79. The other end of the tubing 71 is connected to the liquid-sending pump 74 for the high-power cleaning liquid 46, the other end of the tubing 72 to the stop valve 75, the other end of the tubing 78 to the liquid-sending pump 82 for the neutral cleaning liquid 81, and the other end of the tubing 79 to the stop valve 83.

The stop valves 62, 75 and 83 are in communication with the waste liquid bottle 63 that is allowed to communicate with the intake pump 65. In addition, the waste liquid bottle 63 is connected to the port *F* of the injection valve 14 with the tubing 36 onto which the stop valve 84 is inserted.

On the other hand, the autosampler 5 is provided with the three-way changeover valve 44 having the port *a* allowed to communicate with the waste liquid bottle 48 via the tubing 47, the port *b* allowed to communicate with the needle 32 via the tubing 43, the port *d* allowed to communicate with high-power cleaning liquid bottle 73 via the tubing 49 and the common port *c* allowed to communicate via the tubing 50 with the micropump 45 that is the suction and discharge means.

Next, when performing the analysis of the sample liquid using the liquid chromatograph of the present invention, the needle 32 is moved to above a desired sample bottle 28 on the sample tray 27 and allowed to descend so as to such a prescribed amount of the sample liquid with the micropump 45. Thereafter, the needle 32 is moved to above the injection port 33 and allowed to descend and inserted into the injection port 33 and, at the same time, the lower end of the needle is engaged with the tapered surface 33a to airtightly retain the small contact portion, operate the micropump 45 to discharge the sample liquid, and discharge the sucked sample liquid out to the injection valve 14 in the state in which the sample has been injected therein. For this reason, the sample liquid is injected from the injection port 30 into the port *A,* allowed to pass through the ports *A* to *B* and injected into the sample loop 32.

Thereafter, the injection valve 14 is switched from the aforementioned state shown in Figure 3 to the measurement state, the ports *D* and *E,* ports *B* and *C* and ports *A* and *F* are allowed to communicate with each other, respectively, and the liquid pump 9 and 10 are actuated to send the solvents 7 and 8 out to the mixer 13. The mixer 13 mixes the solvents 7 and 8, moves the resultant mixed solvent from the port *D* to the port *E*, to sample loop 35 and from the port *B* to the port *C* to guide the mixed solvent having the sample liquid placed thereon to the tubing 19 and send the same out to the column 15. The column 15 separates the sample liquid into individual constituent elements, sends these out into the tubing 20 to move these to the detection portion 16 or 17, measures these at the detection portion 16 or 17 and outputs the measured values thereof onto a display (not shown).

Thus, in the present invention, since the injection port 39 is attached to the injection valve 14 and since the needle 32 is inserted into the injection port 33 of the injection port to suck in and discharge out the sample liquid, the sample liquid can be injected, with extraneous material prevented from mingling therewith. In addition, in the autosampler 5, since the sample tray 27 is disposed apart from the injection port 39 and from the first and second cleaning blocks 51 and 66 each provided with the injection port 33 and cleaning ports and since the region of the movement of the needle 32 during the cleaning is separated from the sample tray 27, there is no possibility of the sample liquid or cleaning liquid falling down the sample bottle 28 or being mixed and of cross-contamination being obviated to enhance the analysis reliability.

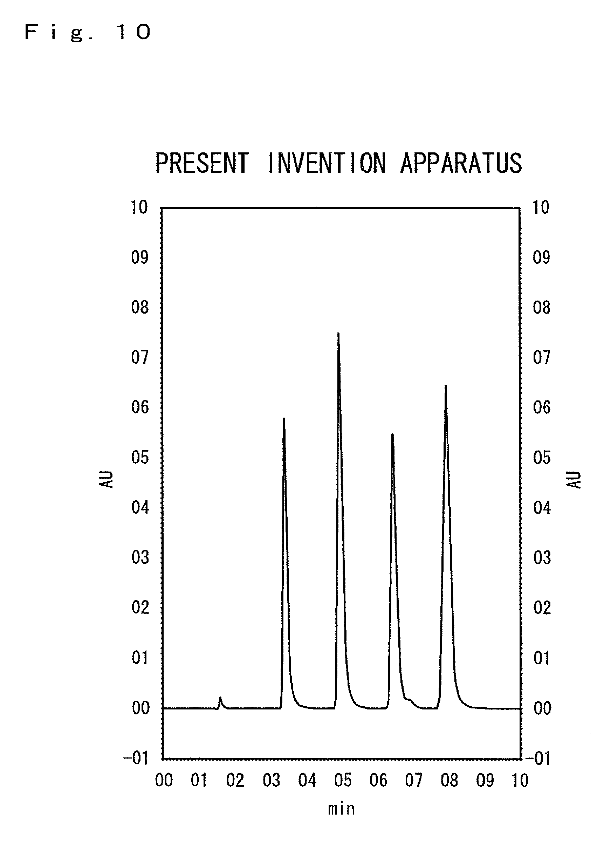

In this case, in the liquid chromatograph of the present invention, since each of the connection tubing for the respective constituent elements is plumbed in the shortest length as described above to reduce the dead volume in each connection tubing, diffusion of the sample liquid can be suppressed and the mixed solvent can rapidly be sent out to the column 15 via the injection valve 14. Therefore, the separation of the sample liquid components is facilitated to rapidly elute the components and suppress their retention time from being suppressed, thereby enhancing the analytical precision. These states are as shown in Figures 10 and 11. The chromatogram shown in Figure 10 according to the present invention shows that the components have sharp and high peaks and are well separated from one another, whereas the chromatogram shown in Figure 11 according to the prior art apparatus shows that the peaks of the components are low in height, are spread in width and separated not so well from one another.

The cleaning for the liquid chromatograph of the present invention will next be described. The cleaning process of the present invention is divided into cleaning of the outside of the needle 32 having the sample liquid sucked therein, cleaning of the injection port 33 and injection valve 14 immediately after the sample liquid is injected into the injection valve 14, cleaning of the inside and outside of the needle and of the interior of the injection port 33 preparatory to the next analysis, cleaning of the interior of the injection valve subsequent to the present analysis and solvent substitution. In addition, the cleaning method includes cleaning with the cleaning liquids 46, 60 and 81.

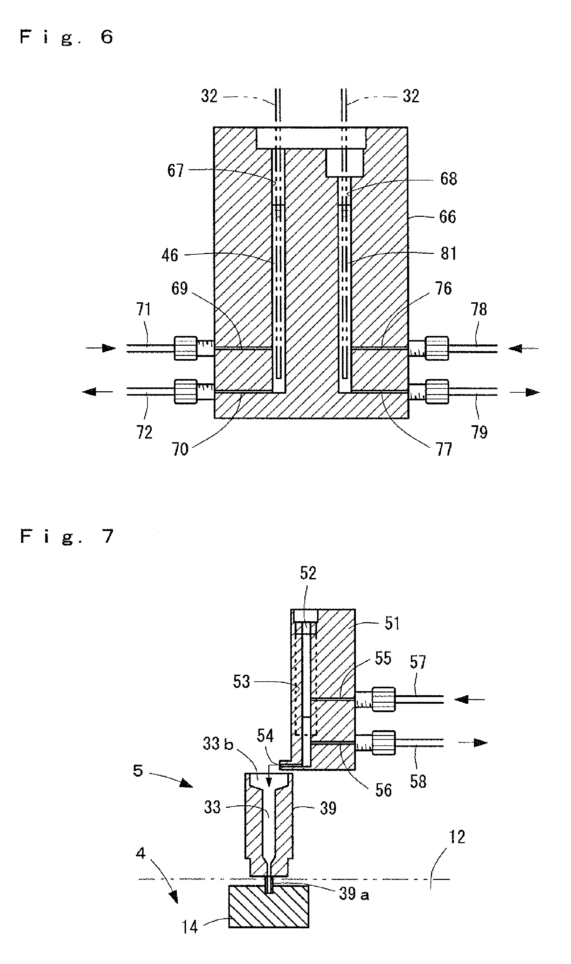

At first, when cleaning the sample liquid having adhered to the outside of the needle 32 after the needle 32 inserted into the sample liquid sucks the sample liquid therein, after the needle 32 having sucked the sample liquid therein is moved to immediately above the second cleaning block 66, allowed to descend, inserted into the high-power cleaning port 67, the stop valve 75 is closed to drive the liquid-sending pump 74, thereby supplying the high-power cleaning liquid 46 to the high-power cleaning port 67 to immerse the needle 32 in the cleaning liquid 46. Thus, the outside of the needle 32 is cleaned. This state of affairs is as shown in Figure 6.

After this cleaning, the needle 32 is pulled up from the high-power cleaning port 67 and the stop valve 75 is opened to drive the intake pump 65, thereby discharging the used high-power cleaning liquid 46 in the high-power cleaning port 67 out into the waste liquid bottle 63. Thereafter, the needle 32 is moved to the side of the injection port 33 and inserted therein to inject the sample liquid into the injection valve 14.

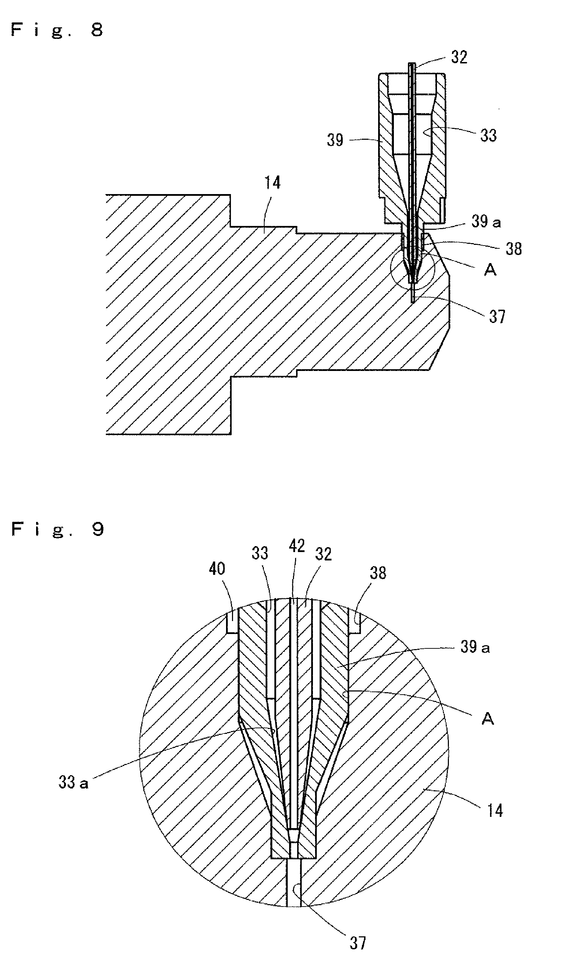

When cleaning the needle 32 immediately after the sample liquid is then inserted into the injection valve 14, this cleaning is performed, with the needle 32 inserted into the injection port 33. This state of affairs is as shown in Figures 8 and 9. Thereafter, the changeover valve 44 is switched to allow the micropump 45 and high-power cleaning liquid 46 to communicate with each other via the tubing 49, thereby sucking the high-power cleaning liquid 46 into the micropump 45.

Thereafter, the micropump 45 is operated for discharging the high-power cleaning liquid 46 that passes through the changeover valve 44 and is sent out to the needle 32 and discharged from the distal end of the needle 32 to the injection port 33. The high-power cleaning liquid 46 are moved from the injection port 33 to the ports *A* to *F* of the injection valve 14, guided to the tubing 36 and discharged out into the waste liquid bottle 63. In this case, repetition of the suction of the high-power cleaning liquid 46 and the cleaning therewith can precisely clean the inside of the needle 32, the injection port 33 and the inside of the injection valve 14.

Next, after the sample is inserted, when cleaning the inside and outside of the needle 32 and the interior of the injection port 30 preparatory to the next analysis, the high-power cleaning liquid 46 and neutral cleaning liquid 78 are selected depending on the cleaning conditions. At first, when cleaning the inside and outside of the needle 32 with the high-power cleaning liquid 46, the needle 32 is moved to immediately above the second cleaning block 66, allowed to descend and inserted into the high-power cleaning port 67 and thereafter the changeover valve 44 is switched to drive the micropump 45, thereby sucking the high-power cleaning liquid 46.

Thereafter, the changeover valve 44 is switched to allow the micropump 45 and needle 32 to communicate with each other, the pump 45 to be operated for discharge, and the sucked high-power cleaning liquid 46 to be sent out into the needle 32 for cleaning the inside of the needle and discharged out to the high-power cleaning port 67. The stop valve 75 is then opened to drive the intake pump 65 to discharge the used high-power cleaning liquid 46 out into the waste liquid bottle 65.

After the inside of the needle 32 is thus cleaned, the stop valve 75 is closed to drive the liquid-sending pump 74, thereby sending the high-power cleaning liquid 46 to the high-power cleaning port 67, with the needle 32 inserted into the high-power cleaning port 67 and immersing the needle 32 in the high-power cleaning liquid 46 to clean the outside of the needle. This state of affairs is as shown in Figure 6. In this case, repetition of cleaning the inside and outside of the needle 29 with the high-power cleaning liquid 43 can precisely clean the inside and outside of the needle 29.

Next, when cleaning the inside and outside of the needle 32 with the neutral cleaning liquid 81, the stop valve 83 is closed to drive the liquid-sending pump 82, thereby sending the neutral cleaning liquid 81 to the neutral cleaning port 68 via the tubing 78 to fill the cleaning port 68 with the neutral cleaning liquid 81. With this state maintained, the needle 32 is moved to immediately above the second cleaning block 66, allowed to descend and, after the needle is inserted into the neutral cleaning port 68, the micropump 45 is operated for suction and discharge plural times to repeat the suction and discharge of the neutral cleaning liquid 81 into and from the needle 32. As a consequence, the inside of the needle can be cleaned.

After the inside of the needle 32 is cleaned, the stop valve 83 is opened to drive the intake pump 65, thereby discharging the used neutral cleaning liquid 81 out into the waste liquid bottle 63. In this case, since the needle 32 is immersed in the neutral cleaning liquid 81, the outside of the needle is simultaneously cleaned with the neutral cleaning liquid 81 as a matter of practice.

Next, the changeover valve 44 is switched to allow the micropump 45 and high-power cleaning liquid 46 to communicate with each other to operate the micropump 45 for suction. Thereafter, the changeover valve 44 is switched to allow the micropump 45 and the needle 32 to communicate with each other, thereby operating the micropump 45 for discharge to clean the inside of the needle 32 through flow of the high-power cleaning liquid 46 into the inside of the needle. After thus cleaning the inside of the needle 32 with the high-power cleaning liquid 46, the stop valve 83 is opened to drive the intake pump 65, thereby discharging the used high-power cleaning liquid 46 out into the waste liquid bottle 63.

Thus the inside of the needle 32 is cleaned with the neutral cleaning liquid 81 and high-power cleaning liquid 46 in the order mentioned. That is to say, the cleaning with the neutral cleaning liquid 81 less possible to induce deposition and precipitation is first performed and the cleaning with the high-power cleaning liquid 46 exhibiting the powerful cleaning effect is then performed to exactly clean the inside of the needle completely and cope with the characteristics of the sample liquid.

After cleaning the inside of the needle 32, the outside thereof is cleaned. In this case, the stop valve 83 is closed to drive the liquid-sending pump 82, the neutral cleaning liquid 81 is sent to the neutral cleaning port 68 into which the needle 32 has been inserted, thereby filling the cleaning port 68 with the neutral cleaning liquid 81 and immersing the needle 32 in the neutral cleaning liquid to clean the outside of the needle. After cleaning the outside of the needle 32 with the neutral cleaning liquid 81 in this way, the stop valve 83 is opened to drive the intake pump 65 and discharge the used neutral cleaning liquid 81 out into the waste liquid bottle 63.

On the other hand, cleaning of the injection port 33 and the inside of the injection valve 14 with the high-power cleaning liquid 46 is performed during the analysis after the sample injection. In this case, the injection valve 14 during the analysis is switched from the state shown by the broken line in Figure 3 to the communication state shown by the solid line therein, thereby allowing the ports *A* to *F* to communicate with one another, the port F to communicate with the waste liquid bottle 63 via the tubing 36 and stop valve 84 kept opened and the intake pump 65 to communicate with the waste liquid bottle 63.

Since the above cleaning is performed over the injection port 33 and the inside of the injection valve 14, it is necessary to avoid the state in which the sample liquid remaining on the injection port 33 adheres to the needle 32. For this reason, after the sample liquid injection, the needle 32 is moved together with the Z-, Y and X-guides 29 to 31, or independently moved to immediately above the injection port 33, thereby retaining the needle 32 as being disposed immediately above the injection port 33 in a separated state to bring the two to a non-contact state.

The changeover valve 44 is switched under these circumstances to allow the micropump 45 to communicate with the high-power cleaning liquid 46, suck the high-power cleaning liquid 46, switch the changeover valve 44 to operate the micropump 45 for discharge, send the sucked high-power cleaning liquid 46 to the needle 32, allow the high-power cleaning liquid to drop or flow from the lower end of the needle 32 to the injection port 33, guide the liquid to the tubing 36 via the ports *A* to *F*, and open the stop valve 84 to discharge the liquid out into the waste liquid bottle 63.

Thus, the high-power cleaning liquid 46 is allowed to flow downward within the injection port 33 and be moved from the port A of the injection valve 14 to the ports *A* to *F,* thereby cleaning that portion. In this case, repetition of the movements of dropping and flowing the high-power cleaning liquid 46 plural times enables the cleaning to be precisely performed.

On the other hand, the cleaning of the injection port 33 and the inside of the injection valve 14 with the neutral cleaning liquid 81 is fundamentally the same as the case of cleaning with the high-power cleaning liquid 46. However, the neutral cleaning liquid 81 cannot be sucked with the micropump 45 even when the changeover valve 44 has been switched. For this reason, the stop valve 83 is closed to send the neutral cleaning liquid 81 to the neutral cleaning port 68 via the liquid-sending pump 82, thereby filling the port 68 with the neutral cleaning liquid. The needle 32 is then moved to above the neutral cleaning port 68, allowed to descend and, after the suction of the neutral cleaning liquid 81, moved to above the injection port 33, thereby dropping or flowing-down the neutral cleaning liquid 81 into the injection port 33.

Next, the secondary cleaning for cleaning the inside of the injection valve 14 more precisely than the case described above is performed after the primary cleaning of the injection valve 14, thereby cleaning the loop flow channel including the sample loop 35 in the injection valve 14 with the high-power cleaning liquid 46 or neutral cleaning liquid 81. The secondary cleaning is fundamentally the same as the primary cleaning of the injection port 33 and the inside of the injection valve 14 with the high-power cleaning liquid 46 or neutral cleaning liquid 81 though the two differ only in the method of sending the cleaning liquid from each other.

That is to say, the high-power cleaning liquid 46 or neutral cleaning liquid 81 is sucked in the needle 32 using the aforementioned method to insert the needle 32 into injection port 33. In this case, since the injection port 33 has already been cleaned using the aforementioned method, no problem of cross-contamination arises even when the needle 32 is brought into contact with the injection port 33.

At this moment, the cleaning is performed through supplying of the sucked high-power cleaning liquid 46 or neutral cleaning liquid 81 into the injection port 33, while the stop valve 84 is kept opened without operating the intake pump 65, and discharge of the cleaning liquid 46 or 81. That is to say, when the injection valve 14 is switched as shown in Figure 3, the cleaning liquid is moved to the port *A*, sample loop 35, ports Eto Fand guided to the tubing 36 to clean the flow channel in the valve 14 and the injection port 33.

In addition, when the injection valve 14 is switched from the state shown in Figure 3, the cleaning liquid is moved to the port *A* and ports *A* to *F* and guided to the tubing 36 to clean the flow channel in the valve 14 and the injection port 33. Therefore, by performing the cleaning, with the injection valve 14 switched, any of the flow channels within the injection valve 14 can be cleaned.

Next, though the solvent substitution is not called direct cleaning, it aims at substituting the normal solvent 60, i.e. cleaning liquid the same as or identical to the mobile phase, for the cleaning liquid remaining within the injection valve 14 and corresponds to the initialization of the autosampler 5. At this moment, the injection valve 14 is switched to the state of the sample injection. This state of affairs is as shown in Figure 3 and allows the injection port 33 to communicate with the ports *A* to *B*, sample loop 35 and ports *E* to *F*.

In these circumstances, the normal cleaning liquid 60 is sent via the liquid-sending pump 61 to the first normal cleaning port 52 to fill the cleaning port 52 with the liquid. The stop valve 62 is then opened before the normal cleaning liquid 60 overflows to drive the intake pump 65, thereby discharging the normal cleaning liquid 60 to the tubing 58 and cleaning the interior of the first standard cleaning port 52.

Next, the stop valve 62 is closed under the operation of the liquid-sending pump 61 to allow the normal cleaning liquid 60 in the first normal cleaning port 52 to overflow and flow into the second normal cleaning port 53 and allow the liquid to flow from the lower discharge spout 54 downward into the liquid-pooling portion 30b disposed immediately below the spout and into the injection port 33.

As soon as the sufficient amount of the normal cleaning liquid 60 is allowed to overflow, driving of the liquid-sending pump 61 is stopped. Thereafter, the stop valve 84 is opened to drive the intake pump 65, thereby guiding the normal cleaning liquid 60 having flowed into the injection port 33 from the ports *A* to *B* in the injection valve 14 to the sample loop 35 and from the ports *E* to *F* to the tubing 36 and discharging the same out into the waste liquid bottle 63. In this way, the injection valve 14 is flushed out with the normal cleaning liquid 60 having the same composition as the mobile phase to initialize the autosampler 5.

Thus, in the liquid chromatograph of the present invention, the cleaning liquid 46, 60 and 81 of the different kinds are allowed to flow into the injection port 33 and the inside of the injection valve 14 after the suction of the sample liquid and before and after the injection thereof during the analysis and over the time after the analysis, thereby precisely cleaning over the details effectively and preventing cross-contamination resulting from the remaining or adhering sample liquid or cleaning liquid to thereby enable the analysis reliability to be enhanced.

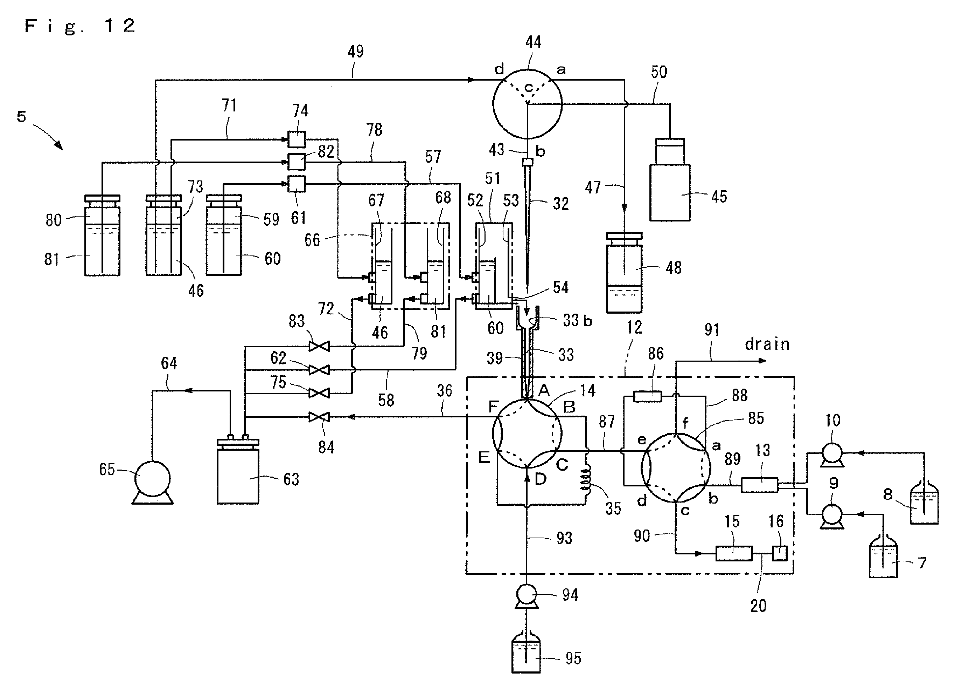

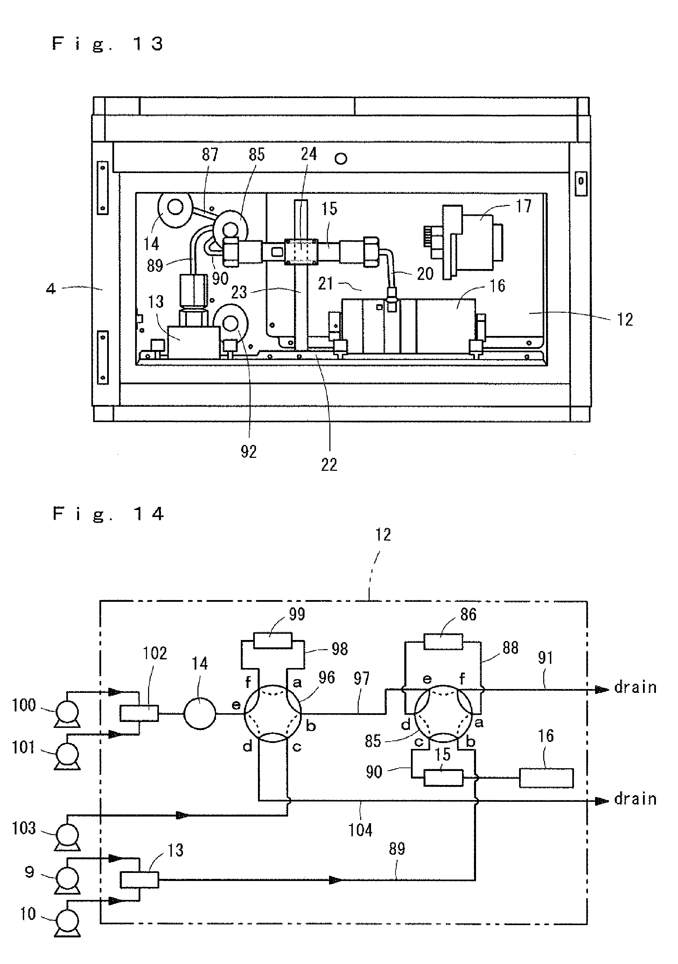

Figure 12 to Figure 14 show different embodiments of the present invention, in which the constituent elements corresponding to those of the previous embodiment are given the same reference numerals. Of these embodiments, Figure 12 and Figure 13 show the second embodiment of the present invention, illustrating a case where the present invention has been applied to an LC system for a high-performance liquid chromatograph provided with a column switching function. That is to say, the oven 12 has the mixer 13, the injection valve 14, the main column 15 for analysis, the detection portion 16 or 17, such as a UV-VIS detector or an electrochemical detector, a switching valve 85 and a trap column 86 disposed therein capable of being set to the same analytical environment or the same temperature conditions.

The switching valve 85 comprises a six-port changeover valve and is formed therein with six loop flow channels that can selectively be switched between the flow channels shown by solid lines in Figure 12 and the flow channels shown by broken lines therein. The switching valve 85 is disposed at a position close to the injection valve 14, and a tubing 87 is plumbed between their ports *e* and *C*. The length of the tubing is made as small as possible to reduce the dead volume therein.

A trap loop 88 is disposed between the ports *a* and *d* of the switching valve 85, the trap column 86 is inserted onto the loop 88, and the sample liquid injected into the sample loop 35 of the injection valve 14 is send to the trap loop 88, thereby enabling the specific components to be retained on the trap column 86.

A tubing 89 has one end thereof connected to the port *b* of the switching valve 85 and the other end thereof connected to the mixer 13, and a tubing 90 has one end thereof connected to the port *c* and the other end thereof connected to the main column 15, and the detection portion 16 or 17 is connected to the main column 15 via the tubing 20. In the figures, reference numeral 91 denotes a drainpipe connected to the port *f* of the switching valve 85 and numeral 92 a multi-port changeover valve for a two-dimensional chromatography disposed within the oven 12.

The tubings 89 and 90 are designed to have smallest lengths which are connectable to the corresponding main column 15 and detection portion 16 or 17 and which are in accordance with their shapes and dimensions. In order to realize these connections, the main column 15 is movable in the three-dimensional direction as described earlier and the detection portion 16 or 17 is movably attached to and along the fixed rails 22, with its attachment position adjustable. Thus, these components can compactly be disposed rationally.

Besides, in the figure, reference numeral 93 denotes a tubing having one end thereof connected to the port *D* of the injection valve 14 and the other end thereof connected to a liquid-sending pump 94 to enable an elution solvent 95 to be sent to the trap column 86. Incidentally, though the present embodiment uses one switching valve because at least one switching valve suffices, use of plural switching valves, for example, connected respectively to separate columns different in separation mode can obtain a larger peak capacity and reply to complicated sample separation.

In this embodiment, since the switching valve 85 and trap column 86 constituting the column switching are disposed within the oven 12, a trouble of externally providing these constituent elements can be eliminated to enable the securement of their installation space and the use of their storage housing to be omitted. In addition, since the switching valve 85 is disposed in the vicinity of the injection valve 14 and since their connection tubing 87 is plumbed in the shortest length, the dead volume therein is reduced and, furthermore, the connection tubings 90 and 20 for the switching valve 85, main column 15 and detection portion 16 or 17 are plumbed in their respective shortest lengths to enable the dead volumes therein to be reduced.

Moreover, in disposing the main column 15 and detection portion 16 or 17, the main column 15 is made movable in the three-dimensional direction as described above and the detection portion 16 or 17 is movably attached to and along the fixed rails 22, with their attachment positions adjustable. Thus, these components can compactly be disposed rationally.

In this embodiment, the procedures of sucking the sample liquid in the needle 32 of the autosampler 5 and injecting the liquid into the sample loop 35 of the injection valve 14 are performed in the same manner as in the previous embodiment. That is to say, the injection valve 14 is switched as shown in Figure 12, the needle 32 is inserted into the injection port 33 to discharge out the sample liquid and inject the same into the sample loop 35.

Thereafter, the injection valve 14 is switched and the switching valve 85 is switched as shown in Figure 12 to allow the elution solvent 95 to be sent out via the liquid-sending pump 94, moved from the tubing 93 to the ports *D* to *E* and sample loop 35, pushed out to the ports *B* to *C*, with the same placed on the elution solvent 95, and sent out from the tubing 87 to the switching valve 85. Then, the sample liquid is send out from the ports *d* to *e* of the switching valve 85 to the trap loop 88, guided to the trap column 86 to generally trap the intended component of the sample with the trap column 86, and the excess is moved from the ports *a* to *f* to the drainpipe 91 and discharged out.

After the above trapping, the switching valve 85 is switched to allow the trap loop 88 to communicate with the liquid-sending flow channel, the elution solvents 7 and 8 to be sent to the mixer 13 via the liquid-sending pumps 9 and 10, and the mixed solvent to be sent to the switching valve 85. The mixed solvent is then moved from the ports *b* to *a* the trap loop 88, and the mixed solvent having the trapped sample component placed thereon is moved from the ports *d* to *c* to the tubing 90, guided to the main column 15 where the sample component is separated, the separated component is measured at the detection portion 16 or 17, and the measured values are output onto the display. The cleaning is performed in the same manner as described above, with the injection valve 14 switched from the state shown in Figure 12.

Figure 14 schematically shows the third embodiment of the present invention to which the second embodiment is applied and in which the present invention is applied to the analysis of the component that is a protein derived from yeast (enzymatic digest). For this reason, a switching valve to be described later is stored in the oven 12 so as to enable a sample having a cell lysate digested with protease to be introduced into the injection valve 14. In addition, a switching valve 96 just described above is inserted between the injection valve 14 and the switching valve 85 to allow the port *e* thereof to communicate with the injection valve 14 and the port *b* to communicate with the port *e* of the switching valve 85 via a tubing 97. A trap loop 98 is disposed between the port *a* of the switching valve 96 and the port *f*, and an ion exchange column that is a strongly-acidic cationic column (SCX) is inserted on the trap loop 98 as a one-dimensional separation column 99.

In the figure, reference numeral 100 and 101 denote liquid-sending pumps on the one-dimensional side that sends an aqueous ammonium formate buffer solution that is an elution solvent, with its compositions varied successively to enable the solution to be supplied to a mixer 102. Denoted by reference numeral 103 is a liquid-sending pump that is similar to the liquid-sending pumps 100 and 101 and is used as occasion demands for desalting the trap column 86 and by numeral 104 is a drainpipe connected to the port *d*.

On the other hand, the switching valve 85 uses a trap column of a reversed-phase partition system as the trap column 86, inserts a reversed-phase column different in separation mode from the one-dimensional separation column 99 onto the tubing 90 as the two-dimensional separation column 15 to enable the separated component to be detected at the detection portion 16. A mixed solvent comprising water, acetonitrile and formic acid can be sent from the liquid-sending pumps 9 and 10 on the two-dimensional side, similar to the liquid-sending pumps 100 and 101, to the separation column 15.

In the third embodiment thus configured, since the mixers 13 and 102, injection valve 14, separation columns 15 and 99, trap column 86, switching valves 85 and 96 and detection portion 16 or 17 are disposed inside the oven and since their connection tubings 89, 90 and 97 can be plumbed in their shortest lengths, the dead volumes therein can be reduced, the solvent can rapidly be sent to obtain the constituent elements exhibiting sharper peaks without being influenced by room temperature and obtain stable repeatability.

In this embodiment, the sample introduced from the injection valve 14 is moved to the switching valve 96 together with the eluting solution produced via the mixer 102 from the one-dimensional liquid-sending pumps 100 and 101 and, by stepwise changing the composition ratio using the liquid-sending pumps 100 and 101, separated by the one-dimensional separation column 99. The component of the sample eluted is guided by the tubing 97, moved to the switching valve 85 and trapped with the trap column 86 of the reversed-phase system. In this case, the detection portion 16 or 17 in accordance with the species to be analyzed is disposed in the trap loop 98 or tubing 97 to enable the eluted component to be analyzed.

Thereafter, the switching valve 85 is switched as shown by the broken line to send the eluting solution from the liquid-sending pumps 9 and 10 on the two-dimensional side to the switching valve 85 via the mixer 13, move the same to the trap loop 88 and guide it to the trap column 86 of the reversed-phase system where the component of the sample eluted is desorbed. The eluted component thus desorbed is guided to the tubing 90 and separated by the two-dimensional separation column 15 to move the separated component to the detection the detection portion 16 and detect the separated component.

While use of only the one-dimensional separation by the reversed-phase mode relative to a complicated sample, such as enzymatic digestion protein mixture, results in being liable to lack in peak capacity (number of peaks), since the third embodiment described above uses the two-dimensional separation by the combination of different separation modes without being mutually affected to enable larger peak capacity to be obtained and the separation for a complicated sample to work well. Therefore, since the two-dimensional liquid chromatography utilizing a combination of the cationic exchange mode and the reversed mode can be built up, sufficient performance can be fulfilled as a main apparatus for the proteomic analysis.

### Industrial Applicability:

The liquid chromatograph is suitable for a liquid chromatograph system, for example, because it is adapted to dispose the constituent elements thereof rationally, enable the lengths of the tubings for connecting the constituent elements to be minimized, reduce the dead volume in the LC system in plumbing, increase the analytical precision through prevention of diffusion of samples and rapid sending of a mixed liquid solvent and, at the same time, set analytical environment including the temperatures relative to the respective constituent elements rationally and suppress influences resulting from fluctuation of the analytical environment to thereby enable the repeatability and reliability of the analysis to be obtained and enable the attachment, maintenance and inspection of the respective constituent elements to be performed with ease, while disposing only the detection portion of the detector within the oven in an isolated state, suppressing the oven or LC system from being large in size, simultaneously cleaning the flow channels for the cleaning liquid precisely and rationally and preventing cross-contamination resulting from residues of the samples and cleaning the liquid in the flow channels and, at the same time, isolating the area of movement of the needle during cleaning from the pool area of the samples and obviating contamination resulting from a fall of the samples and cleaning liquid having adhered to the needle, thereby enabling the analysis reliability to be enhanced.

### Explanation of Reference Numerals:

1: Liquid chromatograph
5: Sample introduction portion unit (autosampler)
7: Elution solvent
8: Elution solvent
9, 10: Liquid-sending pumps
12: Constant temperature reservoir
13: Mixer
14: Injection valve

15: Separation column (two-dimensional)
16: Detection portion
17: Detection portion
18, 19, 20 and 90: Tubings
24: Sample tray
25: Sample bottle
29: Needle

33: Injection port
32: Sample loop
39: Injection piece
38: Notched portion
43: Cleaning liquid (high-power cleaning liquid)
58: Cleaning liquid (normal cleaning liquid)

65: Cleaning port
66: Cleaning port
78: Cleaning liquid (neutral cleaning liquid)
85: Switching valve
96: Switching valve
99: Separation column (one-dimensional)

## Claims

1. A liquid chromatograph comprising:
a sample tray for storing thereon multiple sample bottles containing samples;
an autosampler equipped with a needle that moves above the sample tray and is capable of sucking therein and discharging therefrom each of the samples;
an injection piece having an injection port into which the needle is inserted;
an oven having an interior adjustable in temperature to a prescribed temperature; and
an injection valve which has a flow channel and into which each sample is loaded via the needle, a mixer capable of mixing plural elution solvents, a column which has an introduction side and an exit side and which is capable of separating plural components from each sample and a detector capable of measuring the separated components, which are all installed in the oven keeping at a constant temperature;
wherein the injection valve is disposed above an upper portion of one side within the oven, the mixer and the introduction side of the column are disposed via a tubing at a position closed to the injection valve, the detector has a flow cell including detection unit disposed via a tubing at a position close to the exit side of the column, and the injection port is disposed on one side of the autosampler immediately above the injection valve to thereby enable the injection port to connection with the flow channel of the injection valve.

2. A liquid chromatograph according to claim 1, wherein the a flow cell including detection unit of the detector is installed at a position which is close to the column and which is movable and adjustable so as to be corresponding to a position of the column.

3. A liquid chromatograph according to claim 1, wherein the column is installed at a position movable and adjustable in a three-dimensional direction relative to the injection valve or switching valve and the flow cell including detection unit of the detector.

4. A liquid chromatograph according to claim 3, further comprising at least one switching valve, wherein the injection valve and the switching valve are disposed closely within the oven.

5. A liquid chromatograph according to claim 1, wherein the needle has a tapered end disposed in linear contact with a portion of the injection port.

6. A liquid chromatograph according to claim 1, wherein the injection port has a end portion connected to the injection valve with screws and is provided in an upper peripheral surface with a pair of notched portions with which a tool is able to engage.

7. A liquid chromatograph according to claim 1, further comprising plural liquid-delivery pumps disposed immediately below the mixer so as to enable elution solvents to be delivered via tubings.

8. A liquid chromatograph according to claim 4, further comprising plural separation columns different in separation mode from each other, wherein at least one switching valve comprises plural switching valves which are disposed within the oven so as to be able to communicate with one another and which are connected to the separation columns.

9. A liquid chromatograph according to claim 8, wherein the plural separation columns comprise a one-dimensional separation column and a two-dimensional separation column, and the plural switching valves comprise two switching valves, one connected to the one-dimensional separation column and the other to the two-dimensional separation column.

10. A liquid chromatograph comprising:
an autosampler equipped with a sample tray for storing thereon multiple sample bottles containing samples, a cleaning port capable of storing cleaning liquid therein and discharging it therefrom and a needle that moves between the sample tray and the cleaning port and is capable of sucking therein and discharging therefrom each of the samples contained in the sample bottles;
an injection valve which has a flow channel therein and into which each sample can be injected via the needle;
an injection port allowed to communicate with the flow channel of the injection valve and for inserting therein and detaching therefrom the needle; and
plural cleaning ports for storing therein different cleaning liquids,
wherein the injection port and cleaning ports are disposed on one side within the autosampler immediately above the injection valve and disposed apart from the sample tray.

11. A liquid chromatograph according to claim 10, wherein the needle is airtightly engaged with the injection port allowed to communicate with the flow channel of the injection valve, and the cleaning liquid supplied into the needle is moved to the injection port and the flow channel of the injection valve, thereby discharging the cleaning liquid outside of the injection valve.

12. A liquid chromatograph according to claim 10, further comprising suction and discharge means coordinating an end of the needle into which the sample liquid has been injected and which has been immersed in the cleaning liquid in the cleaning port to enable the cleaning liquid to be sucked into and discharged from the needle.

13. A liquid chromatograph according to claim 10, wherein the needle into which the sample liquid has been injected is retained above and apart from the injection port, and the cleaning liquid is capable of being supplied into the needle, allowed to drop or flow downward into the injection port and moved in the flow channel in the injection valve and discharged outside the injection valve.

14. A liquid chromatograph according to claim 10, wherein the needle having the cleaning liquid sucked therein is inserted into the injection port having been cleaned, and the injection valve is switched to enable the cleaning liquid to be moved into and discharged out of the flow channel in the injection valve.

15. A liquid chromatograph according to claim 10, further comprising cleaning liquid which is the same as or identical to an elution solvent and which is stored in the cleaning port after being cleaned, deliver to the injection valve switched to a sample injection state, moved in the flow channel in the injection valve and a sample loop to enable the liquid to be discharged out.

16. A liquid chromatograph according to claim 10, wherein the cleaning port has a discharge spout disposed immediately above the injection port to enable cleaning liquid which is the same as or identical to an elution solvent sent out to the cleaning port to be supplied to the injection port.
